(19) Europäisches Patentamt
European Patent Office
Office européen des brevets

(11) **EP 4 353 902 A1**

(12) **EUROPEAN PATENT APPLICATION**

(43) Date of publication:
**17.04.2024 Bulletin 2024/16**

(21) Application number: 23202353.1

(22) Date of filing: **09.10.2023**

(51) International Patent Classification (IPC):
**D21H 27/10** (2006.01)    **D21H 19/74** (2006.01)
**D21H 19/82** (2006.01)    **D21H 19/84** (2006.01)
**D21H 21/16** (2006.01)    **D21H 27/30** (2006.01)
**B65D 85/72** (2006.01)

(52) Cooperative Patent Classification (CPC):
**D21H 19/74; B32B 27/10; B65D 5/067;
B65D 5/746; B65D 75/48; B65D 85/72;
D21H 19/82; D21H 19/84; D21H 21/16;
D21H 27/10; D21H 27/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.10.2022 EP 22201111**

(71) Applicant: **Tetra Laval Holdings & Finance S.A.
1009 Pully (CH)**

(72) Inventors:
• **NYMAN, Ulf
241 92 Eslöv (SE)**
• **MARKBO, Olivia
227 30 Lund (SE)**
• **ALDÉN, Mats
266 31 Munka Ljungby (SE)**
• **KRIECHBAUM, Konstantin
222 21 Lund (SE)**
• **SAXENA, Amit
215 37 Malmö (SE)**
• **NORDSTRÖM, Fredrik
652 26 Karlstad (SE)**

(74) Representative: **Tetra Pak - Patent Attorneys SE
AB Tetra Pak
Patent Department
Ruben Rausings gata
221 86 Lund (SE)**

(54) **USE OF A PAPER SUBSTRATE, THE BARRIER-COATED PAPER SUBSTRATE, A LAMINATED PACKAGING MATERIAL AND PACKAGING CONTAINER COMPRISING IT**

(57)    The present invention relates to the use use of a paper substrate (10a, 10b) made from cellulose fibres, for a gas-barrier material in a laminated packaging material (40a) for packaging of oxygen sensitive products, and further to coated such paper substrates (30a) for increased gas barrier properties. The invention further relates to laminated packaging materials (40a) comprising the paper substrates or barrier coated paper substrates, and to packaging containers comprising the laminated packaging material, for packaging of oxygen-sensitive products, such as food products.

Fig. 4a

EP 4 353 902 A1

**Description**

Technical field

The present invention relates to the use of a paper substrate made from cellulose fibres, as a gas-barrier material in a laminated packaging material for packaging of oxygen sensitive products, such as oxygen sensitive food products as well as liquid, semi-liquid or viscous food products or water, and further to coated such paper substrates for increased gas barrier properties when subjected to mechanical stress. The invention further relates to laminated packaging materials comprising the coated or uncoated paper substrates, and to packaging containers comprising the laminated packaging material, for packaging of oxygen-sensitive products.

Background of the invention

Packaging containers of the single use carton type for liquid foods are often produced from a packaging laminate based on paperboard or carton. One such commonly occurring packaging container is marketed under the trademark Tetra Brik® Aseptic and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold forming along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik® -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium-foil based packaging laminate for liquid food aseptic packaging is still the most cost-efficient and low-carbon-emitting liquid packaging material, at its level of performance, available on the market today. There is, however, a strive towards replacing the aluminium foil with non-foil barrier materials to reduce the carbon footprint further.

Any other material to compete with the foil-based materials must be cost-efficient regarding raw materials, have comparable food preserving properties, a reduced carbon footprint and have a comparably low complexity in the converting of materials into a finished packaging laminate.

Among the efforts of developing non-aluminium-foil materials for liquid food carton packaging, there is also a general incentive towards developing pre-manufactured films or sheets having high and multiple barrier functionalities, which may replace the aluminium-foil barrier material in the conventional laminated packaging material or combine several separate barrier layers in the laminated material and adapt it to conventional processes for lamination and manufacturing.

Preferred types of such alternative, more environmentally sustainable barrier materials are barrier-coated paper substrates made by aqueous dispersion coating or vapour deposition coating onto thin paper carrier substrates. There are various aqueous dispersion coating processes and vapour deposition coating processes and material recipes for such coatings, and there is a need for cost-efficient barrier materials of "non-foil" type, i.e. non-aluminium-foil, having improved properties for use in packaging laminates for liquid food packaging, regarding barrier properties, in particular towards gases, such as oxygen gas.

An earlier patent publication WO2011/003565A1 discloses a non-aluminium-foil packaging material comprising a dispersion-coated and subsequently metallised paper or cellulose-based substrate for the purpose of induction heat sealing.

The earlier patent publication WO2017/089508A1 discloses how improved barrier properties may be obtained in a similar manner from a metallised paper in a similar packaging laminate, but by selecting a paper substrate providing optimal properties. Such a metallised paper substrate provided not only improved barrier properties, but also indicated better stability of the metallised layer for induction heat sealing purposes.

There remains, however, a need for further improved oxygen gas barrier properties from prior art gas-barrier coated paper substrates, especially in the field of liquid and wet food packaging. There is also an increased need for improved properties regarding recyclability and environmental sustainability of the materials used for gas-barrier coated paper substrates and laminated packaging materials containing them.

Disclosure of the invention

It is, accordingly, an object to make use of an improved paper substrate contributing to good gas barrier properties of laminated packaging materials comprising the paper substrate, without comprising an aluminium foil ("non-foil"), for the purpose of packaging of oxygen sensitive products.

It is also a general object to provide improved barrier-coated paper substrates providing for or contributing to good gas barrier properties, as well as for improved recyclability and environmental sustainability, of such non-foil laminated packaging materials.

It is a further object to provide non-foil, laminated packaging materials for oxygen-sensitive products, such as liquid, semi-liquid or viscous food products including water, which do not contain aluminium foil but provide good barrier properties and gas barrier properties, in packages made therefrom.

It is a specific object to provide a, relative to aluminium foil barrier materials, cost-efficient, non-foil, paper- or paperboard-based, laminated packaging material, having good gas and water vapour barrier properties, as well as good recyclability and environmental sustainability for the purpose of manufacturing packages for long-term, aseptic storage of liquid food.

It is a further object of the invention to provide a cost-efficient, non-foil, paper- or paperboard-based, mechanically robust and heat-sealable packaging laminate having good gas and water vapour barrier properties and good internal layer adhesion, for the purpose of manufacturing aseptic packaging containers for long-term storage of liquid foods at maintained nutritional quality under ambient conditions.

These objects are attainable according to the present invention by the use of an improved paper substrate, by the barrier-coated such paper substrate, by laminated packaging materials comprising the improved paper substrate or the barrier-coated paper substrate, and by packaging containers made from a laminated packaging material, as defined in the appended claims.

Summary of the invention

According to a first aspect of the invention, there is provided a use of a paper substrate made from cellulose fibres, as a gas-barrier material in a laminated packaging material for packaging of oxygen sensitive products, such as for packaging of oxygen sensitive food products, such as for liquid, semi-liquid or viscous food products or water, wherein the paper substrate has a grammage from 30 to 100 $g/m^2$, as measured according to ISO 536:2012, a strain at break in the machine direction above 3%, as measured according to ISO 1924-3:2005 and a Bendtsen surface roughness on at least one side below 150 ml/min, as measured according to ISO 8791-2:2013.

In an embodiment, the used paper substrate has a strain at break in the machine direction in the range of 3.5% - 9.0%, such as 4.0% - 8.0%, as measured according to ISO 1924-3:2005.

In a further embodiment, the paper substrate has a strain at break in the cross direction above 5.0%, as measured according to ISO 1924-3:2005.

Conventional papers have a strain at break in the machine direction, MD, of about 1.5 %, and in the cross direction, CD, of about 2.5-3 %.

The increased stretchability, i.e. strain at break, in the MD, seems to add significant flexible properties to a gas-barrier coated paper structure having such a paper substrate. It is proven by the present invention that a gas-barrier coated paper substrate, having a strain at break above 3 %, when laminated in a carton-based packaging material, significantly improves the final oxygen barrier properties of shaped packaging containers formed from the laminated material.

The paper substrate may be constituted by at least 90 % of cellulose fibres, per dry weight of the paper. The paper substrate may be made from chemical pulp, such as from Kraft fibres.

The paper substrate may have a basis weight below 90 g/m$^2$, such as below 80 g/m$^2$, such as below 70 g/m$^2$, such as below 66 g/m$^2$, such as below 60 g/m$^2$, such as below 55 g/m$^2$, such as below 50 g/m$^2$, as measured according to ISO 536:2012. There has been seen a general advantage for integrity and robustness of filled and sealed liquid carton packages, by using thinner paper substrates for carrying barrier coatings. The thinner papers seem to reduce strain and mechanical stress acting on the gas barrier coatings, upon folding and forming into packages, such that the final gas barrier of the filled and ready packaging container may be improved as well.

In a further embodiment, the Bendtsen surface roughness on at least one side is below 100 ml/min, such as below 70 ml/min, such as below 50 ml/min. The surface smoothness of a substrate is important for the homogeneity and quality of subsequently applied gas barrier coatings. Well working gas barrier coatings need to be thin, in order to be as flexible as possible when shaped and folded into packaging containers. Thicker coatings may be more vulnerable to folding strain and they are more difficult and costly to apply as well. Since vapour deposited coatings and liquid dispersion coatings for gas barrier preferably are thin, they also need to be of homogenous and reliable quality, such that they can provide gas barrier properties at every point of the gas barrier material coating, in the laminated packaging material that constitutes a final packaging container.

The paper substrate may be impregnated, at least from its top side, with a polymer, such as selected from a group consisting of polyvinyl alcohol, PVOH, ethylene vinyl alcohol, EVOH, starch, starch derivatives, carboxymethyl-cellulose, CMC, or other cellulose ether. The top side of the paper substrate is the side having the smoothest surface, and/or the side to be further coated with gas barrier coatings. As the paper substrate is impregnated with a polymer having a high environmentally sustainable profile, the paper will be subject to pressure and filling of its porous, fibrous, interior network with polymer substance, such that its interior bulk and surface may be more closed. The fibrous structure within the paper may be pressed together and be locked in a densified state and acquire a smoothened surface, by the dried and solidified polymer.

In an embodiment, the paper substrate may have a high density, such as at least 800 kg/m$^3$, such as at least 900 kg/m$^3$, such as at least 1000 kg/m$^3$, as measured according to ISO 534:2011.

The paper substrate may have been calendered, such as supercalendered. The purpose of a calendering operation is to further provide the paper substrate with a lower surface roughness and a higher density, such as at least 800 kg/m$^3$, such as at least 900 kg/m$^3$, such as at least 1000 kg/m$^3$. The paper substrate preferably has a higher density than 900 kg/m$^3$, such as higher than 1000 kg/m$^3$, to provide an as stable and thin as possible substrate and carrier for further applied, gas barrier coatings to endure the various challenges encountered in the field of liquid carton packaging. Such challenges include but are not limited to the packaging of a heavy, flowable product sensitive to oxygen, the strain on the various materials during converting and manufacturing into a multilayer laminated packaging material, the filling and forming and sealing operations in packaging machines, and the handling and distribution of the filled and sealed packaging containers under various climates and conditions. Such higher-density paper substrates provide a stable and durable support for gas barrier coatings applied at only a few micrometer of thickness, or even at nanometer thicknesses, e.g. below half a micrometer, in such liquid packaging laminates.

The paper substrate may also, or as an alternative to impregnation, have a base coating comprising a polymer applied onto the top side of the paper substrate, i.e. to be located beneath the subsequently applied gas-barrier coatings. A base coating composition may comprise a polymer selected from a group consisting of polyvinyl alcohol, PVOH, ethylene vinyl alcohol, EVOH, starch, starch derivatives, carboxymethylcellulose, CMC, or other cellulose ether, i.e. one or more of the same polymers useful for impregnation, for further improvement of the surface of the paper substrate.

In another embodiment, a base coating composition may comprise a polymer binder having a Tg of -3 °C or lower, such as -10 °C or lower, such as -15 °C or lower, such as -20 °C or lower. The polymer binder may be an acrylic or methacrylic homo- or co-polymer. Other suitable polymer binders in coating compositions for a coating in stretchable paper and paperboard applications may be polyurethane-based binders, vinyl acetate-based binders and polyester resins having a Tg < -3°C.

The base coating composition may further comprise inorganic fillers selected from the group consisting of calcium carbonate containing material, talc, kaolin, clay, titanium dioxide, satin white, bentonite and mixtures thereof. In an embodiment, the inorganic filler is selected from the group consisting of calcium carbonate containing material, clay, kaolin and mixtures thereof.

The purpose of a base coating, is to provide the paper substrate with a smoother surface and/or to enable a better quality in any further coating or layer applied onto the base-coated surface, by forming a bridge of better bonding to a paper substrate having an increased strain-at-break, such as above 3 %, in the machine direction.

The application of a base coating may be carried out by a suitable aqueous dispersion application method and subsequent drying to evaporate the water. The thus base coated and dried substrate may be subjected to calendering.

The base coating may be very thin, such as from 0,5 to 3 $g/m^2$, such as from 0,5 to 2 $g/m^2$, such as from 0,5 to 1,5 $g/m^2$, such as from 0,5 to 1 $g/m^2$. The base coating may or may not contribute with some further oxygen barrier, inherent to the material used. A thin base coating of starch or carboxymethyl cellulose serves to provide a smooth and closed surface on the paper substrate, for example, and will not contribute with any significant inherent gas barrier properties.

According to a second aspect of the invention, there is provided a gas-barrier-coated paper substrate, for use as a gas-barrier material in a laminated packaging material for oxygen sensitive products, such as oxygen sensitive food products or water, such as for liquid, semi-liquid or viscous food products or water, wherein the paper substrate for use according to the first aspect has at least one gas-barrier coating of at least one gas barrier material to a total coating thickness from 2 to 5000 nm, such as from 2 to 4000 nm.

The at least one gas-barrier coating may be formed by coating and subsequent drying of a dispersion or solution of an aqueous composition of at least one gas barrier material.

In one embodiment, the top-side surface of the paper substrate is coated to a dry coating thickness from 100 to 5000 nm (from 0,1 to 5 $\mu$m), such as from 100 to 4000 nm (from 0,1 to 4 $\mu$m), such as from 300 to 3500 nm (from 0,3 to 3,5 $\mu$m), such as from 300 to 3000 nm (from 0,3 to 3 $\mu$m), with a gas barrier material comprising a polymer, such as a binder polymer or coating polymer.

The gas barrier material may comprise a polymer selected from the group consisting of vinyl alcohol polymers or copolymers, such as polyvinyl alcohol, PVOH, or ethylene vinyl alcohol, EVOH, and polysaccharides or polysaccharide derivatives. Suitable polysaccharides or polysaccharide derivatives may be selected from the group consisting of starch, starch derivatives, chitosan, chitosan derivatives, cellulose, cellulose derivatives, derivatives and lignocellulose derivative compounds. In an embodiment, the polymer is of entirely renewable (i.e. non-fossil based) origin.

In a more specific embodiment, the gas barrier material may comprise a polymer selected from the group consisting of vinyl alcohol polymers and copolymers, such as from the group consisting of polyvinyl alcohol, PVOH, and ethylene vinyl alcohol, EVOH, starch and starch derivatives, xylan, xylan derivatives, nanofibrillar cellulose /microfibrillar cellulose, NFC/ MFC, nanocrystalline cellulose, NNC, and blends of two or more thereof.

In another embodiment, the top-side surface of the paper substrate has a vapour deposition coating of a gas barrier material selected from metals, metal oxides, inorganic oxides and amorphous diamond-like carbon coatings.

The oxygen barrier properties are further increased as the paper substrate is first impregnated and further coated with a conventional coating layer, which may be very thin but still capable of providing excellent gas barrier properties in such a combination. The gas barrier performance of a thin coating, such as coatings provided by dispersion or solution coating of gas barrier compositions, at a few micrometers only, or such as coatings by vapour deposition coating processes like PECVD, PVD, CVD and atmospheric plasma processes at nanometer thicknesses, is reinforced and protected by the effect of the impregnated and pore-filled paper substrate. Moreover, a lower surface roughness of an impregnated paper substrate may be obtained, due to the filled voids and the smoothening effect of a polymer, such that it enables a greatly improved quality of the subsequently applied gas barrier coatings, thus getting fewer pinholes and more even thicknesses. Accordingly, the use of a stretchable paper substrate in laminated packaging materials and packages for oxygen barrier purposes provide further and significantly improved results when impregnated and/or base coated and subsequently coated with coatings of gas barrier materials, due to a combination of positive effects and mechanisms.

According to a third aspect of the invention, a laminated packaging material for packaging of oxygen sensitive products, such as oxygen sensitive food products for food, such as liquid, semi-liquid or viscous food products or water, comprising the paper substrate of the first use aspect, or comprising the further gas-barrier-coated paper substrate of the second aspect, is thus provided. The laminated packaging material further comprises a bulk layer of paper or paperboard or other cellulose-based material, a first outermost liquid tight material layer and a second innermost liquid tight material layer.

For the purpose of carton packaging of liquid or viscous food products, the laminated packaging material may thus further comprise a bulk layer of paper or paperboard or other cellulose-based material, a first outermost liquid tight, material layer, a second innermost liquid tight material layer and, arranged on the inner side of the bulk layer of paper or paperboard, between the bulk layer and the second innermost layer, the paper substrate or the gas-barrier coated paper substrate. The second innermost liquid-material may further be a heat-sealable material layer.

According to a fourth aspect of the invention there is provided a packaging container for packaging of oxygen sensitive food products, such as liquid, semi-liquid or viscous food products or water, comprising the laminated packaging material of the third aspect, intended for packaging oxygen sensitive food products. In particular, packaging containers for packaging of liquid, semi-solid or viscous food are provided. According to an embodiment, the packaging container is manufactured at least partly from the laminated packaging material of the invention, and according to a further embodiment it is in its entirety made of the laminated packaging material.

The use of a paper substrate as described above, and the provision of further gas-barrier coated such paper substrates, thus enable significantly improved gas-barrier properties in laminated packaging materials and in packaging containers made thereof, and may also impart thereto improved repulpability and recycling properties, i.e. increased environmental sustainability.

Generally, the use of the paper substrate in such laminated materials and packages provide for a greater proportion of fibre content, which is both of renewable, i.e. non-fossil origin, and possible to recycle for recirculation of the old materials into creation of new materials.

Furthermore, a paper substrate for carrying thin gas barrier material coatings of three or four micrometers or less, in such materials and packages may also provide for improved robustness of laminated, pre-cut opening holes, i.e. holes that are pre-cut in the bulk layer but which are subsequently laminated with all other layers of the laminate, including the paper substrate.

Detailed description

With the term "long-term storage", in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes and the like within each material layer itself, and yet another contribution comes from the strength of the sealing joints, by which the material is sealed together at the formation of a packaging container. Regarding the laminated packaging material itself, the integrity property is mainly focused on the adhesion of the respective laminate layers to its adjacent layers and on the ability to withstand thermal- and mechanical loads e.g. during folding and sealing, without fracturing. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, water, flavoured water, energy drinks, sport drinks, coffee or tea drinks, coconut water, wine, soups, jalapenos, tomatoes, sauce (such as pasta sauce), beans and olive oil are some non-limiting example of food products contemplated.

Example of other oxygen-sensitive food products, possible to package and protect with the laminated packaging materials of the present disclosure are e.g. dry and/or fatty foods. Examples of fatty foods are cheese, butter and spreads. Such packaging may be flow-wrap packaging or form, fill, seal (FFS) packaging, e.g. in bags. It may also be packaging in a jar, tray, lidded spread container, collapsible tube, clam-shell package, sleeve, envelope or wrapper. In these applications, the packaging material typically undergoes folding or a similar type of stress (e.g. creasing, stretching), which make the packaging material based on the paper substrate of the present disclosure particularly suitable.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content, intact.

With the term "bulk layer" is normally meant the thickest layer or the layer containing the most material in a multilayer laminate, i.e. the layer which is contributing most to the mechanical properties and dimensional stability of the laminate and the structural stability of packaging containers folded from the laminate, such as a thick paper, paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties, such as bending stiffness, for achieveing structure stability of formed packaging containers.

Thickness measurements were performed by Transmission Electronic Microscopy using a Titan 80-300, FEI equipment. Samples may be prepared by ultramicrotomy on an EM UC6 Microtome from Leica.

OTR was measured with Oxtran 2/21 (Mocon) equipment based on coulometric sensors, according to ASTM F1927-14 and ASTM F1307-14.See further description of OTR test methods in connection with the Examples.

There is thus provided a use of a paper substrate, for a gas-barrier material in a laminated packaging material for packaging of oxygen sensitive food products, such as liquid, semi-liquid or viscous food products or water, wherein the paper substrate has a basis weight from 30 to 100 g/m$^2$, as measured according to ISO 536:2012 , a strain at break in the machine direction from above 3% up to 9%, as measured according to ISO 1924-3:2005 and a Bendtsen surface roughness on at least one side from 5 to below 150 ml/min, as measured according to ISO 8791-2:2013. There is also provided such paper substrates having at least one gas barrier coating.

An increase of paper stretchability, i.e. an increased strain-at-break property, can be obtained in paper production by refining the pulp at a high consistency, such as at 20-40 %, such as at 25-38 %. During this process, the fibres are deformed and the produced kinks, i.e. more curled fibres, promote the stretchability of the formed paper.

Another method is to allow the paper web to dry with no or very low restriction to shrink during drying. This implies that the fibre network is created with fibres that are unstretched and in a more relaxed state. When the dried paper is subject to elongation forces, the fibre network can deform to an extent until the fibres reach their breakpoint, ie. their point of strain at break. Sack papers may be produced by this method.

A third method of increasing paper stretchability is to compress the moist paper web in the longitudinal direction of the fibres, i.e. in the machine direction of the paper web. This type of compaction results in a built-in stretch in the machine direction. Paper web machine direction compaction can be done either with a Clupak unit, which includes a nip section with a rubber blanket, or with an Expanda unit, which includes a nip section with one steel roller and one rubber roller, rotating slower than the speed of the paper web. All of the above described methods to increase the stretchability of the paper have the advantage that no further chemicals or stretch promoting materials need to be added in the papermaking process.

In the context of the present invention, a double-roll compactor type usually referred to as an Expanda unit was used to increase the stretchability of the paper substrate. The other methods may be used as well, as single methods or combinations of method steps, depending on the desired level of stretchability and other paper properties.

The paper web may be subjected to drying in the drying section upsteam and downstream the extensible unit. The moisture content of the web in the extensible unit may be in the range of 25%-50 %, such as 30%-40%, such as 30%-38%.

In order to provide a paper substrate with the purpose to form a good oxygen barrier, the number and the size of the pores may be significantly reduced. By extensive refining of the pulp, the degree of fibre bonding will increase and thus reduce the porosity. Greaseproof paper, that is produced by such extensive refining, has sufficiently low porosity to provide a grease barrier. Greaseproof paper has thus been seen as a potential substrate or carrier for an additional gas-barrier coating in prior art. The resulting pulp has, however, high dewatering resistance and demands long time for stock dewatering and is both costly in its manufacturing process and undesired in repulping and recycling processes. Moreover, it needs further improvement also regarding gas-barrier contribution properties. The same is true regarding parchment papers, which in their manufacturing acquire gelatinized fibres by passing a bath of sulphuric acid, which makes the fibres less dewaterable and repulpable, and moreover the parchment papers acquire undesired brittleness.

A different approach to the filling of voids in fibrous cellulose materials is the use of microfibrillar cellulose (MFC) as a major constituent of cellulosic material in a sheet or film, which also provide some oxygen barrier properties. The dewatering resistance of such materials is, however, also high, which may cause similar problems both in manufacturing and in recycling processes. Thus, for the purpose of the present invention, it is not desirable to use paper substrates into which is included MFC, or other types of nanocellulose, in substantial quatities in the pulp for the manufacturing of the paper. Moreover, MFC is not suitable as an impregnating composition of a formed and dried paper, since it in aqueous composition forms a gel, rather than a solution or low-viscosity dispersion.

The paper substrate of the present disclosure may thus be obtained without extensive low consistency (LC) refining, which improves the speed of the paper-manufacturing process (and reduces its energy consumption) and facilitates recycling. Such a comparatively limited refining can be reflected by the drainability measured after repulping.

The cellulose fibres of the paper substrate may exhibit a Canadian Standard Freeness, CSF, value above 200 ml, such as from 200 to 500 ml, such as from 200 to 450 ml, such as from 200 to 350 ml, as measured according to ISO 5267-2:2001, after repulping according to the Valmet repulping method carried out in a Valmet pulper of the type HD400. The Valmet repulping method comprises the re-pulping of 0.5 kg of air-dried paper, cut into 90 by 90 mm (0.09 by 0.09 m) pieces, together with 15 litres of water at 57 deg C in a Valmet pulper at a rotating speed of 3000 rpm, for 20 minutes. The CSF values of the here studied paper substrates are significantly different from those of the best known paper of the prior art, which comprise a higher content of refined fibres to provide a more dense, i.e. less porous, fibrous structure in the paper.

Expressed differently, as a drainability value, the paper substrate may provide a Schopper-Riegler (°SR) number

measured according to ISO 5267-1:1999 of from 30 to 50, such as from 33 to 50, such as from 35 to 45, after repulping according to the standard method of ISO 5263-1:2004. The SR numbers of the studied papers are substantially lower, than for the paper substrates used in the prior art.

Both CSF and SR values measure the dewatering properties of the fibres in a cellulose fibre pulp and indicate how easy or difficult it would be to repulp and recycle the fibers from the paper substrates, and thereby also the laminated packaging materials comprising the paper substrates.

The stretchable paper substrate being formed from cellulose fibres may along the same lines of reasoning provide a mean fines content, as measured with a L&W Fibretester+ (ABB, Lorentzen & Wettre, Sweden), of less than 40 %, such as less than 35 %, such as less than 32 %, as measured according to to ISO 16065-2:2014 after repulping according to ISO 5263-1:2004, wherein fines are defined as fibrous particles shorter than 0.2 mm. The content of fines after repulping of e.g. greaseproof papers would normally be higher, such as above 40 %, such as at least above 35 %, due to the manufacturing process of such papers using pulp with high content of refined fibres. A typical lower limit for the mean fines content is 15% or 20%.

The paper substrate for the use of the invention, may be formed from cellulose fibres comprising at least 50% by dry weight of chemical pulp, such as sulphate pulp, i.e. Kraft pulp or sulphite pulp, such as at least 75% by dry weight chemical pulp, such as at least 85% by dry weight chemical pulp, such as at least 90 % by dry weight chemical pulp, such as at least 95% by dry weight chemical pulp. Sulphate or sulphite pulp is used to obtain a paper that is tough enough for downstream processes, such as coating (that may be carried out at high speed), but also for converting and forming of the final package.

Sulphate/kraft pulp may be preferred since it is widely produced in large quantities. However, sulphite pulp may also be useful since it is generally more easily refined than sulphate pulp. A higher degree of fibre swelling can be obtained with sulphite pulp, which is a drawback from a drying perspective (the energy demand during drying is higher), but an advantage from a density perspective (swelling improves fibre conformability resulting in a more dense sheet). Kraft pulp is advantageous for improved repulping in recycling, and general dewatering of the fibres. Sulphite fibres normally have a higher proportion of refined fibres, which may have an effect slightly to the contrary depending on how much and degree of refinement. According to an embodiment of the invention, Kraft pulp may thus be preferred.

The paper substrate may be formed from cellulose fibres comprising 35-100 %, such as 35-80 %, such as 40-70 % of softwood pulp, by dry weight of the pulp used to form the paper, 0-65 %, such as 20-65 %, such as 30-60 % of hardwood pulp and optionally 0-15 %, such as 0-10 %, of CTMP pulp, by dry weight of the pulp used to form the paper. Thus, the paper substrate may be formed from cellulose fibres comprising 35-80 %, such as 40-70 % of softwood pulp, by dry weight of the pulp used to form the paper, 20-65 %, such as 30-60 % of hardwood pulp, and optionally 0-15 %, such as 0-10 % of CTMP pulp, by dry weight of the pulp used to form the paper substrate.

A benefit of including hardwood pulp is that it collapses relatively easy during refining, while it still allows for efficient dewatering in the wire section of the paper machine. A benefit of including softwood pulp is improved runnability in the paper machine and beneficial strength/toughness properties in the resulting paper. The latter properties may be improved by subjecting the softwood pulp to high consistency (HC) refining. HC refining may also increase strain at break values. HC refining means refining at a consistency of 20%-40%, preferably 25%-38%.

Such compositions of pulps may be advantageous for repulping in recycling and general dewatering properties in the paper manufacturing process, as well as for a high quality of recycled fibres. When the proportion of softwood pulp is relatively high, such as at least 60 %, such at least 70 %, it is beneficial if the Schopper-Riegler (SR) number, measured according to ISO 5267-1:1999, of the pulp used in the manufacturing of the paper, is from 25 to 35. Such SR number may facilitate sufficiently high density of the paper substrate without causing problems in dewatering and/or recycling and may be obtained by adjusting the degree of low consistency (LC) refining.

If the SR number is above 35, it will be difficult to dewater the diluted pulp in the forming section at sufficient speed. If the SR number is below 25, the properties of the final product will typically be inferior. If the consistency of the diluted pulp is above 0.9%, there is a risk that the paper will be too porous and the paper surface too rough, for producing a paper substrate for use of the invention.

When the proportion of hardwood pulp in the furnish is relatively high, such as at least 65% by dry weight pulp, such as at least 75% by dry weight pulp, the Schopper-Riegler (°SR) number measured according to ISO 5267-1:1999 may be from 33 to 50, such as from 40 to 50. Such SR number may facilitate sufficiently high density without causing problems in dewatering and/or recycling and may be obtained by adjusting the degree of low consistency (LC) refining.

The pulp may be diluted to a consistency of 0.1%-0.5%, such as 0.1%-0.4%, to reduce fibre flocculation, which decreases the porosity of the finally formed paper.

Preferably, the softwood fibres used in the paper substrate have been subjected to high consistency (HC) refining, such that the fibers gain some inherent stretchability in the paper substrate.

When softwood pulp is used, it may thus have been subjected to high consistency (HC) refining, i.e. refining at a consistency of 20%-40%, such as 25%-38%, i.e. weight concentration dry fibre in the pulp. The specific energy of the HC refining step may be at least 100 kWh/tonne, such as at least 150 kWh/tonne, such as 150-300 kWh/tonne. The "tonne" of the unit means tonne of dry fiber.

The pulp may be bleached. Thereby the concentration of elements or compounds that may give rise to taint and/or odour in the final package is reduced.

The paper may thus be formed by providing a pulp comprising at least 50 % by dry weight of chemical pulp, such as Kraft pulp or sulphite pulp, having a Schopper-Riegler from 25 to 50, such as from 25 to 45, such as from 25 to 35, diluting the pulp to a low consistency of from 0.1 to 0.9 %, and forming a paper web from the diluted pulp in a forming section, and dewatering the formed paper web in a press section, to obtain an intermediate dry matter content. The pulp may comprise less than 10 %, such as less than 5 % by dry weight of pigments or inorganic filler, such as less than 3 %, such as less than 1 %, such as virtually no pigments or inorganic filler, by dry weight, for further improving repulpability and dewatering properties. Silica or bentonite used as retention agent, typically in an amount of less than 1 kg per tonne dry pulp, is not considered to be inorganic filler. Accordingly, the ash content according to ISO 2144:2015, of the pulp is preferably less than 5%, such as less than 3%, such as less than 1%. After wet pressing, the web may be dried to about 65% fibre weight fraction before entering an extensible unit to be compacted in the machine direction.

According to a specific embodiment, the paper substrate having a top ply and a bottom ply, i.e. a two-ply configuration, may be used. By such a paper substrate its properties may be better tailor-made to its needs. In such a construction, the properties of the top ply may be tailored for receiving another barrier layer, while the bottom ply properties are tailored for strength/toughness. Hardwood pulp may provide an improved surface for another barrier layer. Softwood pulp may improve the runnability in the paper machine and provides beneficial strength/toughness properties in the resulting paper product.

For example, the top ply may be formed from at least 50% by dry weight hardwood pulp, such as at least 65% by dry weight hardwood pulp, such as at least 75% by dry weight hardwood pulp, to enable a more dense and smooth top-side surface of an impregnated and calendered paper.

On the other hand, the bottom ply may be formed from at least 50% by dry weight softwood pulp, such as at least 65% by dry weight softwood pulp, such as at least 75% by dry weight softwood pulp. This may enable easier dewatering and repulping properties, or may simply make the paper cheaper to manufacture. If impregnation also of such a back-side surface is desired, a higher amount of impregnating composition or impregnating polymer may be needed.

The two-ply paper may encompass method steps wherein a first wire is used to form a first web that becomes the top ply and a second wire is used to form a second web that becomes the second ply, and wherein the first and second webs are couched together.

The first web may be formed from a first furnish comprising at least 50% by dry weight hardwood pulp, such as at least 65% by dry weight hardwood pulp, such as at least 75% by dry weight hardwood pulp. The head box consistency of the first furnish may be 0.12%-0.60%, such as 0.18%-0.35%.

The Schopper-Riegler (°SR) number measured according to ISO 5267-1:1999 of the first furnish in the head box may be 33-50, such as 40-50. Such a SR number may facilitate a sufficiently high density without causing dewatering and/or recycling problems and may be obtained by adjusting the degree of low consistency (LC) refining.

The second web may be formed from a second furnish comprising at least 50% by dry weight softwood pulp, such as at least 65% by dry weight softwood pulp, such as at least 75% by dry weight softwood pulp. This softwood pulp preferably has been subjected to high consistency (HC) refining (suitable specific energies are discussed above). The head box consistency of the second furnish may be 0.06%-0.40%, such as 0.10%-0.25%.

In one embodiment, the head box consistency of the second furnish is lower than the head box consistency of the first furnish.

The Schopper-Riegler (°SR) number measured according to ISO 5267-1:1999 of the second furnish in the head box may be 25-35. Such a SR number may facilitate sufficiently high density without causing dewatering and/or recycling problems and may be obtained by adjusting the degree of low consistency (LC) refining.

Preferably, the furnishes comprises less than 2% by weight inorganic filler, such as less than 1% by dry weight inorganic filler, such as substantially no inorganic filler.

In the manufacturing of the two-ply paper, there may optionally be applied a further, interjacent coating or addition of starch or PVOH before couching the top ply and the the bottom ply together.

The density of the paper substrate may preferably be from 1050 to 1500 kg/m3, such as from 1100 to 1400 kg/m3, such as from 1100 to 1300 kg/m3.

An impregnating composition comprising a polymer in aqueous solution may help to lock the fibrous network in a locked position as it is subsequently calendered and dried. Densification of the paper may provide both direct and indirect gas barrier by the use of such a paper substrate and may contribute to successful results of the present invention.

The tensile strength index of the paper substrate may be at least 90 Nm/g, such as at least 100 Nm/g, such as 90-150 Nm/g, in the MD and at least 40 Nm/g, such as at least 50 Nm/g, such as 55-90 Nm/g, such as 60-90 Nm/g, in the CD. The tensile strength index is measured according to ISO 1924-3:2005.

A higher tensile strength index may indicate a paper substrate, useful to withstanding web handling forces during coating and lamination operations.

Preferably, the beneficial barrier and recycling properties are obtained without sacrificing strength, such as tensile strength and tear strength . After the extensible unit and the compacting operation, the paper web may be dried in an after-drying section to form a paper substrate having a moisture content of from 4 to 7 %, for subsequent impregnation with an aqueous composition comprising a water-dissolvable or water-dispersible polymer in a size-press or film-press operation, or the like. The reduction of the moisture content before the impregnation, makes it possible to fill the pores of the web.

The impregnating step may comprise adding an aqueous composition comprising the impregnating polymer to at least the top side of the paper substrate, or to each side of the paper substrate. The top side of the paper substrate is the side to be further coated with gas barrier coatings and is normally the smoothest surface of a paper substrate.

The viscosity measured at 60°C of the aqueous composition may be 55-90 mPa*s. Such a relatively low viscosity facilitates penetration of the polymer into the fiber web. The concentration of the impregnating polymer in the aqueous composition is preferably 7.0%-13.0% (w/v), such as 8.0%-12.0% (w/v). The 60°C viscosity measurement is preferably carried out using a Brookfield rotational viscometer equipped with spindle no.3 at 100 rpm.

To facilitate a further densification, the impregnated paper may subsequently be moisturized to a moisture content of 10-30 %, such as 11-20 %, before being subjected to calendering in a calendering unit comprising at least two heated nips. The calendering operation may preferably be performed in at least one super-calender having from 8 to 20 calender rolls, such as from 9 to 19 rolls, such as from 11 to 17 rolls, and some moisture, such as to a moisture content of from 11 to 20 %, may be applied to the paper web again just before the calendering operation. The total nip impulse of the supercalendering step may be at least 600 kPa*s. The temperature of the surfaces of heated calender rolls may be 120-160 deg C.

The moisture content of the paper web facilitates the calendering operation and thereby provides for increased density, decreased porosity and improved surface properties in the final paper.

During the calendering, the paper is dried out. Excess drying is possible by carrying out additional drying immediately after the calendering (i.e. prior to the reel). Air dryers can be used for such additional drying. With this set-up, a moisture content below 4% can be achieved, which may be advantageous in later performed coating operations, such as in vapour deposition coating operations.

In an embodiment, a suitable paper substrate for the use of the invention may thus further be obtained by impregnating the formed paper with an aqueous impregnating composition, comprising a water-soluble or water-dispersible polymer at a concentration from 5 to 20 weight-%, such as from 5 to 15 weight-%, such as from 7 to 13 weight-%, such as from 8 to 12 weight-%, by a size press or film press operation or the like, and subsequently calendering and drying the thus impregnated paper to a resulting density above 800 kg/m$^3$, such as above 900 kg/m$^3$, such as above 1000 kg/m$^3$. The high densities may preferably be obtained by supercalendering. In an embodiment, the density is at least 1050 kg/m$^3$, such as at least 1070 kg/m$^3$. A typical upper limit for the density may be 1400 kg/m$^3$, such as 1300 kg/m$^3$.

By the impregnation of the paper with an aqueous impregnating composition comprising one or more of the above listed polymers, its interior, porous network of the cellulose fibres beneath the surface of the paper is filled and surronded by the polymers such that when the paper is calendered, the polymer will keep the fibrous bulk of the paper tighter together with fewer voids in between and in a locked position (by the polymer being slightly more elastic in its properties than the cellulose fibres), thus avoiding open passages between fibres through the material also when the material is mechanically abused, such as folded or twisted. This has firstly a direct impact on gas or oxygen molecules that seek to diffuse through the porous material, by the pore-filling effect of the polymers, which should have good affinity to cellulose, and due to the polymers tying the fibres together in locked positions. There may also be an indirect effect on improving gas barrier properties of the paper substrate, in that the pore-filling polymer evens out the irregularities of the fibrous surface of the paper, such that the surface is prepared to give a non-porous and distinct interface to a further aqeous dispersion barrier coating or polymer extrusion coating. This eliminates any air entrapments at the interface that could otherwise give rise to coating defects or compromise the laminate gas tightness.

In an embodiment, a suitable impregnation composition may comprise in the majority, i.e. in an amount of at least 50 weight-%, an impregnating polymer selected from PVOH, EVOH starch and starch derivatives, since these materials are relatively easy to handle and to prepare as low viscosity solutions suitable for impregnation, and they are also relatively cost efficient. Impregnating compositions comprising in the majority, i.e. in an amount of at least 50 weight-%, of an impregnating polymer selected from PVOH and EVOH, are preferred, because they normally provide the better oxygen barrier properties in this group.

The degree of hydrolysis of the PVOH may be 96%-100%, such as 97%-100%, such as 97%-99%. A PVOH having a high degree of hydrolysis is less sensitive to water and is preferred, both in production and in use. The weight average molecular weight (Mw) of the PVOH is preferably below 100,000 g/mol, such as 10,000-90,000 g/mol, such as 30,000-80,000 g/mol. Such a relatively low Mw is preferred during impregnation since it has a relatively low viscosity at a relatively high concentration. A PVOH of low Mw has a greater tendency to penetrate into the fiber web or paper substrate rather than staying on the surface of the paper.

The viscosity of the PVOH when measured according to DIN 53015 is preferably below 20 mPa*s, such as 5-16 mPa*s, such as 6-13 mPa*s.

The degree of polymerization (DP) of the PVOH is preferably below 3000, such as 1000-2000. The DP can be determined from the viscosity-average degree of polymerization derived from the viscosity in water. In such case, viscosity is measured in a 4% aqueous solution at 20 °C and determined by Brookfield synchronized-motor rotary type viscometer.

An example of a suitable PVOH is Poval 10/98 from Kuraray, which has a viscosity of 10 mPa*s, a degree of hydrolysis of 98%, a DP of about 1400 and a Mw of about 61,000 g/mol. Another suitable example is Poval 6/98 from Kuraray, which has a viscosity of 6 mPa*s and a degree of hydrolysis of 98%.

In some applications it may be beneficial to select EVOH as the impregnating polymer. EVOH has higher moisture resistance and excellent oxygen barrier properties. An example of a suitable low-viscosity formulation of EVOH is Exceval® AQ-4104 from Kuraray.

The impregnating composition may comprise a substantial amount of nanocrystalline cellulose, "NCC" (or "CNC"), or a blend of NCC with starch or PVOH, and is adjusted to a viscosity suitable for impregnation. Since NCC is a cellulose and also may provide good oxygen barrier properties, it constitutes an attractive future barrier material in packaging, although it may at present be a less cost efficient alternative for use in bulk quantities.

Nano-crystalline cellulose, NCC, is a form of nano-cellulose but is not the same as "microfibrillar cellulose", "MFC" (CMF) or "nanofibrillar cellulose", NFC (CNF)". Whereas the term "MFC" may in general and incorrectly be used for all types of fibrillated cellulose, the more scientific view is that "MFC" should denote nanoscale cellulose fibrils or fibril aggregates with at least one dimension of less than 100 nm.

MFC may thus contain longer particles, so-called "fibrils" having a width of 10-100 nm, and a length of at least 1 µm, such as up to 10 µm, such as longer than 10 µm.

Both MFC and NFC have an aspect ratio of 50 or above, while NCC may be defined to have an aspect ratio below 50, e.g. in accordance with the draft TAPPI norm WI3021.

The term "NCC", is used for shorter particles and "rod-like" particles, having a width of 3-50 nm, and a length from 100 up towards 1000 nm, such as from 100 to 900 nm, such as from 100 to 500 nm, such as from 100 to 200 nm. The preferred dimensions of NCC for the purpose of impregnating and filling pores in a formed paper, meaning that the majority of the NCC particles in the composition should have this dimension, may be from 100 to 500 nm length, such as from 100 to 200 nm and with a small width of from 3 to 50 nm.

The amount of impregnating polymer may be from 0.5 to 4 g/m$^2$, such as from 1 to 3 g/m$^2$, dry weigth. While the top-side may require impregnation by at least 1 or 2 g/m$^2$ of the polymer, the back-side may be left unimpregnated. The impregnating composition may comprise substantially only water and the impregnating polymer.

Depending on the choice of the type of cellulose fibres at the back-side, the back-side may be impregnated too. The polymer may be impregnated all they way through the cellulose voids of the whole paper thickness, or only partly into the center/middle of the paper thickness. For optimal gas barrier contribution of the paper substrate, it is believed that as much impregnation by the polymer as possible is desired. The amount of impregnating polymer may, however, need to be balanced versus the repulping properties of the paper, for the paper to be useful in recycling processes after use. It may also be preferred to impregnate both sides of the paper, to avoid that the dry paper substrate curls to cause problems in later coating and lamination operations.

Accordingly, "impregnated" means that the impregnating composition and impregnating polymer to a substantial degree has penetrated the fibre web, i.e. to a substantial degree has penetrated the cellulose fibres of the paper substrate. However, it does not necessarily mean that the fibre web, across its thickness direction, has been completely saturated with the polymer. Consequently, the paper substrate may comprise unfilled pores, especially in the middle. The paper substrate and fibre web may thus be impregnated with an impregnating composition comprising an impregnating polymer at an amount from 0.3 to 4.0 g/m$^2$, such as from 0.5 to 3.0 g/m$^2$ of the polymer.

To facilitate the application and impregnation of the polymer, it is water-soluble or water-dispersible.

The degree and depth of the impregnating polymer throughout the thickness of the paper substrate may be studied by taking sliced section samples of the paper and studying them in a SEM microscope. The slicing may be done using e.g. a cryo microtome.

The type of polymer used in the impregnating composition may be determined by FTIR spectroscopy or a combination of FTIR with other spectroscopy methods.

According to an embodiment, a paper substrate is used, which is impregnated and subsequently calendered to a roughness of the top-side surface lower than 100 ml/min Bendtsen, such as lower than 80 ml/min Bendtsen, such as from 7 to 80 ml/min Bendtsen, such as from 7 to 50 ml/min Bendtsen, such as from 7 to 30 ml/min Bendtsen, such as from 7 to 25 ml/min Bendtsen, such as from 7 to 20 ml/min Bendtsen as measured according to SS-ISO 8791-2:2013. A typical lower limit may be 5 or 7 ml/min Bendtsen.

A different measurement of the surface roughness is the Parker Print Surface (PPS) roughness, which should exhibit values such as in the range from 1.0 to 2.0 µm, such as from 1.2 to 1.8 µm, as measured according to SS-ISO 8791-4:2013.

Furthermore, the Gurley value according to ISO 5636-5:2013 of the paper substrate may be above 220 s. The significance thereof that the surface of the high-densty paper substrate is closed, i.e. it does not entrap any air or oxygen among fibres at the surface.

A lower surface roughness provides for a perfect interface to subsequently applied adjacent layers and coatings, with a reduced number of imperfections such as pinholes, and unevenness of the coating layer. Consequently, the coating or further layer may be made at a higher quality, or at a lower thickness, or both. For a same coating thickness of a gas barrier coating, better oxygen barrier properties are thus obtained in the coating itself.

The impregnating step is preferably carried out by means of a size press or a film press. A film press is the most preferred equipment. If the film press is of the two-sided type, a back-side impregnation of the paper web can be performed as well, for further reduction of the porosity of the finally provided paper substrate, and/or for curl control. The film press may be an OptiSizer Film (Valmet) or a SpeedSizer (Voith). After the film press, the web is dried to a moisture content of 12%-25%, preferably about 15%. This drying is preferably carried out by contactless drying, preferably using hot air, until the primer is not sticking to hot metal surfaces followed drying by steam-heated cylinders. The paper may curl due to impregnation of the impregnation composition only from one side of the paper. Impregnation from both sides of the paper may thus better provide for a flat balanced paper substrate.

Thus, the paper substrate may further, at an opposite, back-side surface of the paper, be impregnated with an impregnating composition comprising an impregnating polymer selected from the same group as for the top-side surface of the paper. The paper may be impregnated from the back-side and subsequently calendered to a roughness of the back-side surface lower than 200 ml/min Bendtsen, such as lower than 150 ml/min Bendtsen, as measured according to SS-ISO 8791-2:2013.

The amount of the impregnating polymer, at the top-side of the paper substrate, may thus be from 0,3 to 4 g/m$^2$, such as from 0,3 to 3 g/m$^2$, such as from 0,3 to 2 g/m$^2$, such as from 0,5 to 3 g/m$^2$, such as from 0,5 to 2 g/m$^2$, based on dry weight.

The impregnating composition may comprise a water-soluble or water-dispersible impregnating polymer selected from polyvinyl alcohol, PVOH, and ethylene vinyl alcohol, EVOH, optionally further comprising a crosslinking agent, such as glyoxal, at a weight ratio from 100:3 to 100:12, such as from 100:3 to 100:9. Preferably the impregnating composition is an aqueous solution of the polymer having a low molecular weight and thereby a low viscosity. Examples of PVOH suitable formulations are low-viscosity grades of Poval® from Kuraray. An example of a low-viscosity formulation of EVOH is Exceval® AQ-4104 from Kuraray. The degree of hydrolysis of a PVOH should be as high as possible, such as 98 or 99 %, and a PVOH with low molecular weight may similarly be preferable for best possible impregnating effect. In a further embodiment, the impregnating polymer may be starch or a starch derivative, carboxymethyl cellulose or the like, in aqueous solution. Anionic starch solutions are suitable due to having good affinity to cellulose.

In an embodiment, the impregnating polymer for the back-side surface of the paper may also be selected from polyvinyl alcohol, PVOH, and ethylene vinyl alcohol, EVOH, in aqueous solution, optionally further comprising a crosslinking agent, such as glyoxal, such as at a weight ratio of PVOH to glyoxal from 100:3 to 100:12, such as from 100:3 to 100:9.

In another embodiment, the impregnating polymer for the back-side surface of the paper may instead be starch or a starch derivative, carboxymethyl cellulose or the like, in aqueous solution. This is advantageous in that the paper substrate does not stick back-to-top surfaces when wound-up on a reel for transport and storage. Furthermore, it prevents curling of the paper web during production.

The impregnating composition may further comprise low amounts of inorganic particles selected from the group consisting of clays, such as bentonite, kaolin or baryte, and talcum, CaCO3, or silica particles, in addition to the impregnating polymer. The particle size should be as small as possible for better impregnation properties, but may still support the filling of the voids between the cellulose fibres, together with the impregnating binder polymer of the impregnation composition.

The impregnating composition may penetrate the paper substrate web through a major part of its thickness. Impregnation may be performed both from the top-side and from the back-side of the paper, partly or fully into the center of the paper.

The grammage of the impregnated paper substrate may in an embodiment be from 30 to 90 such as from 30 to 80 such as from 30 to 70, such as from 30 to 66, such as from such as at from 35 to 60 g/m$^2$, such as from 35 to 55 g/m$^2$, such as from 35 to 50 g/m$^2$.

The thickness of the impregnated paper substrate may be from 30 to 95 $\mu$m, such as from 30 to 85 $\mu$m, such as from 30 to 75 $\mu$m, such as from 30 to 70 $\mu$m, such as from 35 to 65 $\mu$m, such as from 35 to 60 $\mu$m, such as from 35 to 55 $\mu$m.

It has been seen that for some uses, such as for liquid-tight packaging of wet or liquid or viscous products, it may be advantageous to use an as thin as possible paper substrate, because then less polymer may be needed in adjacent liquid-tight layers, or heat-sealable layers. Such thermoplastic layers are normally melt-extrusion laminated to the paper substrate, e.g. polyolefin layers or other thermoplastic layers.

The paper substrate may also, or as an alternative to impregnation, be coated with a preparatory base coating on its top side surface. Thus, the paper substrate may be provided with a thin, continuous layer and surface of a base coating, comprising a polymer, applied onto the top side of the paper substrate and to be located beneath the subsequently applied gas-barrier coatings. A base coating composition may comprise a polymer selected from a group consisting of polyvinyl alcohol, PVOH, ethylene vinyl alcohol, EVOH, starch, starch derivatives, carboxymethylcellulose, CMC, or other cellulose ether, i.e. one or more of the same polymers useful for impregnation, for further improvement of the surface of the paper substrate.

The paper may curl due to one-sided base coating of the wet base coating composition only from one side of the paper. Base coating onto both sides of the paper may better provide for a flat balanced paper substrate.

Thus, the paper substrate may further, at an opposite, back-side surface of the paper, also be coated with a base coating composition comprising a polymer selected from the same group as for the base coating on the top-side surface of the paper.

Thus, there is provided a use of a paper substrate for a gas-barrier material in a laminated packaging material for packaging of oxygen sensitive food products, such as liquid, semi-liquid or viscous food products or water, wherein the paper substrate has a grammage from 30 to 100 g/m$^2$, as measured according to ISO 536:2012, a strain at break in the machine direction above 3%, as measured according to ISO 1924-3:2005 and a Bendtsen surface roughness on at least one side below 150 ml/min, as measured according to ISO 8791-2:2013, wherein the paper substrate is impregnated or base coated with a polymer, such as selected from a group consisting of polyvinyl alcohol, PVOH, ethylene vinyl alcohol, EVOH, starch, starch derivatives, carboxymethyl-cellulose, CMC, or other cellulose ether.

The amount of impregnating or base-coated polymer may be from 0.5 to 4 g/m$^2$, such as from 0.5 to 3 g/m$^2$, such as from 0.5 to 2 g/m$^2$, such as from 0.5 to 1.5 g/m$^2$, dry weigth.

In another embodiment, a base coating composition may comprise a polymer binder having a Tg of -3 °C or lower, such as -10 °C or lower, such as -15 °C or lower, such as -20 °C or lower. The polymer binder may be an acrylic or methacrylic homo- or co-polymer. Other suitable polymer binders in coating compositions for a coating in stretchable paper and paperboard applications may be polyurethane-based binders, vinyl acetate-based binders and polyester resins having a Tg < -3°C.

The base coating composition may further comprise inorganic fillers selected from the group consisting of calcium carbonate containing material, talc, kaolin, clay, titanium dioxide, satin white, bentonite and mixtures thereof. In an embodiment, the inorganic filler is selected from the group consisting of calcium carbonate containing material, clay, kaolin and mixtures thereof.

The purpose of a base coating, is to provide the paper substrate with a smoother surface and/or to enable a better quality in any further coating or layer applied onto the base-coated surface, by forming a bridge of better bonding to a paper substrate having increased strain-at-break in the machine direction.

The application of a base coating may be carried out by a suitable aqueous dispersion application method and subsequent drying to evaporate the water. The thus base coated and dried substrate may be subjected to calendering.

There is a clear difference between an impregnation and a coating of a similar polymer composition. An impregnation is done primarily to place the polymer composition into the interior of the paper, i.e. beneath the surface, and it takes place by applying a wet polymer composition and subsequently, or simultaneously, exerting pressing onto the wet, applied surface. A coating operation with a same or similar polymer composition takes place by wet applying and directly drying at high travelling speed of a web of the paper substrate in order to prevent that the liquid of the wet applied polymer composition is absorbed rather than evaporated. The object is to provide a fully covering coating, extending over the full surface of the substrate and being continuous and substantially uninterrupted. Even if not completely perfect, such a base coating provides a good base or foundation for the formation of a subsequently applied, thin but continuous, more perfect and uninterrupted gas barrier coating. It has been seen that an impregnation and a base coating may impart a paper substrate with improved substrate properties in different ways, however leading to similarly improved results in a subsequently applied gas-barrier coating. A continuous and uninterrupted gas barrier coating is of high importance to the resulting gas barrier properties of a coating, in a laminated material. Even if it may be very thin, if without defects, such as pinholes and cracks, it may provide the necessary and long-lasting gas barrier properties that are needed. With an only impregnated paper substrate, more of the gas-barrier coating may have to be applied for a good gas barrier result, while a base-coated paper substrate can be coated with a thinner gas barrier coating, subsequently. On the other hand, the qualities of the base coating may have to be somewhat different, by for example, comprising some inorganic particles or having a higher viscosity during the wet application operation.

A gas-barrier coated paper substrate, for a gas-barrier material in a laminated packaging material for oxygen sensitive products, may be provided by using any one of the above embodiments of a paper substrate of the first aspect of the invention, wherein its top-side surface has at least one coating of at least one gas barrier material to a total coating thickness from 2 to 5000 nm, such as from 2 to 4000 nm. Such thin coatings will not produce reject or waste when the used laminated packaging materials comprising such coatings are recycled in the existing cellulose fibre recycling streams and they do further not consume much material in relation to the benefit that they provide.

The at least one gas-barrier coating may be formed by coating and subsequent drying of a dispersion or solution of an aqueous composition of at least one gas barrier material. The gas-barrier coating forms a continuous and uninterrupted layer of gas-barrier material onto the surface of the paper substrate. This is facilitated by a paper substrate which is impregnated or base coated with an impregnating or base coating polymer material composition. The impregnated or base coated paper substrate has a more smooth and/or closed surface such that a subsequently applied gas-barrier coating may be applied at very low thickness but still with a high quality of the coating, to obtain an even surface and thickness as well as exhibiting homogeneity throughout its thickness and lateral extension of the continuous coating layer.

The top-side surface of the paper substrate may according to one embodiment be coated to a dry coating thickness from 100 to 5000 nm (from 0,1 to 5 $\mu$m), such as from 100 to 4000 nm (from 0,1 to 4 $\mu$m), such as from 300 to 3500 nm (from 0,3 to 3,5 $\mu$m), such as from 300 to 2500 nm (from 0,3 to 2,5 $\mu$m), with a gas barrier material comprising a polymer.

The gas barrier material may comprise a polymer selected from the group consisting of vinyl alcohol polymers or copolymers, such as polyvinyl alcohol, PVOH, or ethylene vinyl alcohol, EVOH, and polysaccharides or polysaccharide derivatives. Suitable polysaccharides or polysaccharide derivatives may be selected from the group consisting of starch, starch derivatives, chitosan, chitosan derivatives, cellulose, cellulose derivatives, and lignocellulose derivative compounds. In an embodiment, the polymer is of renewable (i.e. non-fossil based) origin.

In a more specific embodiment, the gas barrier material may comprise a polymer selected from the group consisting of vinyl alcohol polymers and copolymers, such as from the group consisting of polyvinyl alcohol, PVOH, and ethylene vinyl alcohol, EVOH, starch and starch derivatives, xylan, xylan derivatives, nanofibrillar cellulose /microfibrillar cellulose, NFC/ MFC, nanocrystalline cellulose, NNC, and blends of two or more thereof.

According to another embodiment, the gas barrier material may be a water-dispersible polyamide or polyester, or polyvinylidenechloride. Preferably, such water-dispersible polyamides, polyesters or polyvinylidenechlorid are bio-based and/or are capable of providing oxygen gas barrier properties at only a very low amount of coating, i.e. a very thin coating, such as below 1 g/m$^2$ or below 1,5 $\mu$m, the object being to provide a gas barrier material which is recyclable in the cellulose-fibre recycling streams without leaving undesired amounts of waste material, i.e. so-called "reject".

Such thin coatings are obtained by dispersion or solution coating of a gas barrier material comprised in an aqueous gas barrier composition and subsequent drying and cannot be applied at the thin coating thicknesses by any alternative method, such as extrusion coating. Polymers and substances may be applied as solutions or dispersions in organic solvents other than water, but such methods are generally not relevant for the provision of environmentally sustainable packaging materials of the future.

In a preferred embodiment, a coating of from 0,5 to 3,5 g/m$^2$, such as from 1 to 3 g/m$^2$, PVOH is applied on the top-side surface of the paper substrate.

Further, when the gas barrier material coating is formed by coating and subsequent drying a dispersion or solution of a gas barrier composition, it may further comprise a laminar compound, such as a nano-dimensional laminar clay, talcum or CaCO3.

Thus, there may be provided a gas-barrier coated paper substrate for use in a laminated packaging material for packaging of oxygen sensitive food products, such as liquid, semi-liquid or viscous food products or water, wherein the paper substrate has a grammage from 30 to 100 g/m$^2$, as measured according to ISO 536:2012, a strain at break in the machine direction above 3%, as measured according to ISO 1924-3:2005 and a Bendtsen surface roughness on at least one side below 150 ml/min, as measured according to ISO 8791-2:2013, wherein the paper substrate is in a first step impregnated or base coated with a polymer selected from a group consisting of polyvinyl alcohol, PVOH, ethylene vinyl alcohol, EVOH, starch, starch derivatives, carboxymethyl-cellulose, CMC, or other cellulose ether.

Preferably, the impregnating or base-coated polymer is selected from starch, starch derivatives, carboxymethyl-cellulose, CMC, or other cellulose ethers, and applied at an amount from 0.5 to 4 g/m$^2$, such as from 0.5 to 3 g/m$^2$, such as from 0.5 to 2 g/m$^2$, such as from 0.5 to 1.5 g/m$^2$, dry weigth. The gas-barrier coating may be subsequently applied on top of the impregnated or base-coated, top side of the paper as a continuous, uninterrupted coating at a total thickness from 2 to 4000 nm (4 $\mu$m), such as from 2 to 3000 nm (3 $\mu$m).

According to another embodiment, the gas-barrier coated paper substrate has on its top-side surface a vapour deposition coating of a gas barrier material selected from metals, metal oxides, inorganic oxides and amorphous diamond-like carbon coatings. The vapour deposition coating may more specifically be selected from the group consisting of an aluminium metallisation coating and aluminium oxide, AlOx. Preferably it is an aluminium metallisation coating.

In a further embodiment, the gas-barrier coated paper substrate has on its top-side surface a first, continuous coating of a gas barrier material formed by coating and subsequent drying of a dispersion or solution of an aqueous gas barrier composition, and further a vapour deposition coating of a gas barrier material selected from metals, metal oxides, inorganic oxides and amorphous diamond-like carbon, applied on the first coating. The coated paper substrate having a gas barrier material coating applied is thus subsequently further coated by vapour deposition coating at a thickness of from 2 to 200 nm, such as from 2 to 150 nm, such as from 2 to 100 nm, such as from 5 to 80 nm, such as from 5 to 50 nm, such as from 2 to 45 nm.

A coated paper substrate may further be provided, wherein the back-side of the paper substrate is also coated with at least one coating of at least one gas barrier material as defined in any of the above embodiments.

The vapour deposited barrier coating to finally be coated onto the top-side surface of the paper substrate, is applied by means of physical vapour deposition (PVD) or chemical vapour deposition (CVD), for example by plasma enhanced chamical vapour deposition (PECVD).

Generally, below 5 nm the barrier properties may be too low to be useful and above 200 nm, such as above 100 nm, such as above 50 nm, depending on the type of vapour deposition coating, the barrier coating may be less flexible and, thus, more prone to cracking when applied onto a flexible substrate and would also cost more.

Other examples of vapour deposition coatings are aluminium oxide (AlOx, $Al_2O_3$) and silicon oxide (SiOx) coatings. Generally, PVD-coatings of such oxides may be less suitable for incorporation into packaging materials by lamination, while metallised layers as being made by PVD are highly suitable in flexible packaging laminates.

Normally, an aluminium metallised layer inherently has a thin surface portion consisting of an aluminium oxide due to the nature of the metallisation coating process used.

In an embodiment, such an aluminium metallised layer has been applied to an optical density (OD) of from 1.8 to 3.5, preferably from 1.9 to 2.5. At an optical density lower than 1.8, the barrier properties of the metallised film may be too low. At too high metal thickness, on the other hand, the metallisation layer may become brittle, and the thermostability during the metallisation process will be low due to higher heat load when metallising the substrate film during a longer time. The coating quality and adhesion may then be negatively affected. In an embodiment, regarding flexibility of the coated metallization coating and regarding coating operational efficiency, the metal deposition coating is applied to a thickness of from 10 to 200 nm, such as from 10 to 150 nm, such as from 10 to 100 nm, such as from 10 to 95 nm, such as from 10 to 80 nm, such as from 10 to 50 nm, which corresponds to less than 1 - 3 % of the aluminium metal material present in an aluminium foil of conventional thickness for packaging, such as 6-9 $\mu$m.

Other coatings may be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may then obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers, are obtained with polyolefins and in particular polyethylene and polyethylene-based co-polymers.

The total applied thickness of continuously covering gas-barrier coatings may be up to 5 $\mu$m, such as 4 $\mu$m, such as 3,5 $\mu$m.

A laminated packaging material for packaging of oxygen sensitive products, such as oxygen sensitive food products, such as liquid, semi-liquid and viscous food or water, of the third aspect, thus comprises a paper substrate as defined in any one of the embodiments of the first use aspect, or the barrier-coated paper substrate according to any one of the embodiments of the second aspect, and comprises further a bulk layer of paper, paperboard or other cellulose-based material, a first outermost layer of a liquid tight material and a second innermost layer of a liquid tight material. The second innermost layer may further be a liquid tight, heat sealable material.

The laminated packaging material thus further comprises a bulk layer of paper or paperboard or other cellulose-based material and has the paper substrate, or the gas-barrier coated paper substrate, laminated between the bulk layer and the second innermost layer, which is to be directed to the inside of a container formed from the laminated packaging material.

When the substrate is also coated with a vapour deposition coating, which normally also adds some further water vapour barrier properties to the coated paper substrate, there should be no need to add further gas or water vapour barrier material layers into the total laminated structure.

When the top-side surface of the paper substrate has a first coating of a gas barrier material formed by coating and subsequent drying of a dispersion or solution of an aqueous gas barrier composition, such as PVOH, and further has a vapour deposition coating of a gas barrier material selected from metals, metal oxides, inorganic oxides and amorphous diamond-like carbon, such as an aluminium metallisation coating, applied onto the first coating, a very good material is obtained, which may be used to replace a conventional aluminium foil of micrometer thickness (greater than 5 $\mu$m, such as 6 $\mu$m, as a single oxygen barrier material in a laminated packaging material. The thus applied vapour deposition coating or metallisation may of course be further coated with another wet applied coating or with a vapour deposition coating of a same or different chemistry to improve the barrier properties further, although it should not be necessary and may increase costs further.

In a further embodiment, the paper substrate, or coated paper substrate, may be laminated to the bulk layer by from 0.5 to 5 g/m$^2$ of an interjacent bonding composition comprising a binder selected from the group consisting of acrylic polymers and copolymers, starch, starch derivatives, cellulose derivatives, polymers and, copolymers of vinyl acetate, copolymers of vinyl alcohol, and copolymers of styrene-acrylic latex or styrene-butadiene latex. Such a low amount of an interjacent bonding composition is only possible to apply by aqueous dispersion or solution coating of a polymer binder, and is not possible to apply by extrusion coating or extrusion lamination of a polymer melt. Since the surfaces of the layers to be bonded together are both made of cellulose, such wet lamination is made by the absorption of the aqueous medium into the respective cellulose layers, and thus the formation of a thin and dry bonding layer at the interface between the two layers.

The laminated packaging material may have a pre-manufactured polymer film laminated between the paper substrate or coated paper substrate, and the second innermost liquid tight material layer, for improved robustness of the mechanical properties of the laminated packaging material. A pre-manufactured film has a higher degree of orientation of the polymer of which it is made, and thus has different mechanical properties to a merely extrusion coated or extrusion laminated layer of the same or corresponding polymer. Thus, by incorporating such a film in the structure, the laminated material altogether may be made stronger and better resistant to any downstream tough treatment of the material. It is preferable to avoid such pre-manufactured films in the material, as they add costs both from sourcing of materials point of view and from the lamination operation point of view. Pre-manufactured films may have different mechanical properties and may be ranging from biaxally oriented, tough films obtained by mere extrusion cast films to films manufactured by film blowing and inherent polymer orientation occuring in that process, or with additional subsequent orientation. It is, however, preferred to use polymer materials that are merely extrusion coated or extrusion laminated.

The second innermost layer of a liquid tight, heat sealable material may be a polyolefin, preferably a blend of low density polyethylene, LDPE, and metallocene-catalysed linear low density polyethylene, m-LLDPE. This is the type of polymer most used today for the innermost layer, for best balanced liquid tightness and heat sealability properties, and which generates best possible package integrity of heat sealed packaging containers. By choosing the composition of this layer carefully, the amount of polymer in this layer may be optimised to be as low as possible while still producing strong and reliable packages filled with product.

In one embodiment, the second innermost liquid tight, heat sealable material layer may be, or comprise, a pre-manufactured polymer film, the film comprising a heat-sealable thermoplastic polymer material and, optionally, a further layer of a material for providing improved robustness of the mechanical properties of the laminated packaging material.

In a specific embodiment, the laminated packaging material may have a pre-manufactured polymer film substrate laminated on the inner side of the paper substrate or coated paper substrate, i.e. on the side of the paper substrate which is opposite to the side that is laminated to the bulk layer, wherein the pre-manufactured polymer film substrate has a vapour deposition coating of a gas barrier material selected from metals, metal oxides, inorganic oxides and amorphous diamond-like carbon coatings.

The laminated packaging material may according to a different specific embodiment have a pre-manufactured polymer film substrate laminated on the inner side of the paper substrate or coated paper substrate, i.e. on the side of the paper substrate which is opposite to the side that is laminated to the bulk layer, wherein the pre-manufactured polymer film is filled with an inorganic laminar compound to provide the polymer film with gas and vapour barrier properties.

According to yet another specific embodiment, the laminated packaging material may have a pre-manufactured polymer film substrate laminated on the inner side of the paper substrate or coated paper substrate, i.e. on the side of the paper substrate which is opposite to the side that is laminated to the bulk layer, wherein the pre-manufactured polymer film has been coated and subsequently dried, by a gas barrier material obtained by dispersion or solution of a gas barrier material composition to a dry coating thickness from 100 to 4000 nm (from 0,1 to 4 $\mu$m), such as from 300 to 3500 nm (from 0,3 to 3,5 $\mu$m), such as from 300 to 2500 nm (from 0,3 to 2,5 $\mu$m).

The purpose of any one of the previously listed specific emodiments, is to add complementary properties to the laminated packaging material, when using merely the paper substrate as such, as a gas barrier material in the laminate structure, or when using a coated such paper substrate, or wherein the applied coating provides only some gas barrier properties, or when the coating has only moisture-sensitive gas barrier materials. By laminating the coated paper substrate to a further polymer film, which adds some further more moisture-resistant oxygen barrier properties, or at least water vapour barrier properties, the at least two different gas barrier materials may interact to provide further enhanced total barrier properties to the total laminate structure. The necessary bonding layer between the paper substrate and the further barrier film ensures such enhanced barrier properties and may promote them to a synergetic level, due to the interjacent bonding layer acting as a further "gas- and vapour migration stopper" in the laminated structure.

The film may include heat sealable layers, or be entirely heat sealable, such that it forms or becomes part of the innermost heat sealable layer.

The outer- and innermost, liquid-tight layers and the lamination layers in the interior of the laminate structure, do not normally add high barrier properties to migrating gas molecules or small molecules. Their purpose is to provide a direct barrier to water or other liquids from penetrating through to the cellulose-based bulk material and other paper layers. The liquid barrier layers also prevent water vapour from migrating to the cellulose to the extent that it gets wet, but they are not capable of keeping the moisture content of the laminated structure at zero or at the low level of "dry" paper (which is at about 7-8 % in an environment at ambient temperature, i.e. at 23 deg C, and 50 % relative humidity, RH). The moisture content in the laminated carton material of a packaging container filled with liquid is usually rather high and migration through the material occurs, unless there is a further water vapour barrier included, such as an aluminium foil, a vapour deposited metallisation layer, other vapour deposition coating, inorganic material layer or other polymer material layer.

In any of the previously listed embodiments involving a pre-manufactured film, the pre-manufactured polymer film may comprise a polymer selected from any one of polypropylene, polyethylene, blends thereof and copolymers of ethylene and propylene and optionally a further comonomer. According to a further embodiment the pre-manufactured polymer film may comprise a polymer selected from high density polyethylene or a linear low density polyethylene.

On the inside of the pre-manufactured film, as described in any one of the alternatives above, there may be an additional, extrusion-coated layer or multilayer portion of innermost, heat sealable and liquid tight polymers. Such heat sealable thermoplastic polymers may also, or alternatively form part of the pre-manufactured film.

A paper or paperboard bulk layer for use in the invention usually has a thickness of from about 100 $\mu$m up to about 600 $\mu$m, and a surface weight of approximately 100-500 g/m$^2$, preferably about 200-300 g/m$^2$, and may be a conventional paper or paperboard of suitable packaging quality. Conventional paper or paperboard bulk layers have a strain at break in the MD below 3 % and are thus not stretchable. The purpose of the bulk layer in the laminated packaging materials of the present invention is to provide dimensional stability, rigidity and stiffness to packaging containers, e.g. for use in wet and humid conditions and/or for storage of liquids and wet (heavy) food products. On the other hand, a thin and stretchable paper substrate, having a strain-at-break in the machine direction above 3 %, provides a good carrier layer for thin and delicate gas-barrier coatings, enabling improved gas barrier properties to such packaging containers.

For low-cost aseptic, long-term packaging of liquid food, a thinner packaging laminate may be used, having a thinner paper core layer. The packaging containers made from such packaging laminates are not fold-formed and more similar to pillow-shaped flexible pouches. A suitable paper for such pouch-packages usually has a surface weight of from about 50 to about 140 g/m$^2$, preferably from about 70 to about 120 g/m$^2$, more preferably from 70 to about 110 g/m$^2$.

The paper substrate may be bonded to the bulk layer by an intermediate adhesive, or thermoplastic polymer bonding layer, thus binding the un-coated surface of the barrier-coated paper to the bulk layer. According to an embodiment the bonding layer is a polyolefin layer, such as in particular a layer of a polyethylene-based polyolefin copolymer or blend, including in the majority ethylene monomer units. The bonding layer may be binding the bulk layer to the barrier-coated cellulose-based substrate by melt extrusion laminating the bonding polymer layer between a web of the bulk layer and a web of the cellulose-based substrate, and simultaneously pressing the three layers together while being forwarded through a lamination roller nip, thus providing a laminated structure by extrusion lamination.

In another embodiment, the barrier-coated cellulose-based substrate may thus be bonded to the bulk layer by wet application of an aqueous dispersion of an adhesive composition comprising an adhesive polymer binder onto one of the web surfaces to be laminated and pressing the two paper webs together while they are forwarded through a lamination roller nip, thus providing a laminated structure by wet lamination. The moisture of the aqueous adhesive composition is absorbed into the fibrous cellulose network of the two paper layers, and partly evaporating with time, during the subsequent lamination processes. There is thus no need for a forced drying step. The adhesive polymer binder is selected from the group consisting of acrylic polymers and copolymers, starch, cellulose and polysaccharide derivatives, polymers and copolymers of vinyl acetate and vinyl alcohol. For best possible environmental and sustainability profile, adhesive binders originating from plants or non-fossil sources are preferred.

Suitable thermoplastics for the outermost and innermost liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. According to an embodiment, the outermost liquid-tight layer is an LDPE, while the innermost heat sealable, liquid-tight layer is a blend composition of m-LLDPE and LDPE for optimal lamination and heat sealing properties.

The same thermoplastic polyolefin-based materials, as listed regarding the outermost and innermost layers, and in particular polyethylenes, are also suitable in bonding layers interior of the laminated material, i.e. between a bulk or core layer, such as paper or paperboard, and a further barrier film or sheet. In an embodiment, the thermoplastic bonding layer may be a more simple or conventional polyethylene layer, such as a low density polyethylene (LDPE) layer.

The polyethylene-based polymers have been used and optimised for a very long time in the field of liquid carton packaging materials, but other liqiud-tight materials, such as thermoplastic polymer materials for the further provision of heat sealability and heat processability, such as other polyolefines, such as other polyethylenes or polypropylenes, or such as polyesters, are conceivable within the gist of the present invention. All kinds of bio-based such thermoplastic materials are thus conceivable within the gist of the present inventions, insofar as separate gas barrier properties still have to be provided via the materials described in connection to the use of the invention, of a stretchable paper substrate, and to the barrier-coated stretchable paper substrate.

In a further embodiment, the second innermost liquid tight, heat sealable polyolefin layer is a pre-manufactured film comprising the same or similar polyolefins, as described above, for improved robustness of the mechanical properties of the packaging material. Due to the manufacturing process in film blowing and film casting operations, and optional subsequent film orientation operation steps, the polymers of such films acquire different properties from what is possible from (co-) extrusion coated polyolefin layers. Such a pre-manufactured polymer film thus contributes to the mechanical robustness of a laminated packaging material and to mechanical strength and package integrity of formed and filled packaging containers from the laminate packaging material.

According to a further embodiment, suitable bonding or tie layers in the interior of the laminated material, such as for example between the bulk or core layer and the barrier-coated paper substrate, or between the innermost liquid tight, heat sealable layer and the paper substrate, may be so-called adhesive thermoplastic polymers, such as modified polyolefins, which are based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

A laminated packaging material made according to the above provides good integrity when transformed into filled packaging containers, by good adhesion between the adjacent layers within the laminated construction and by providing good quality of the barrier coating and the barrier pre-coating, each and in combination. Especially, for the packaging of liquids, and wet food, it is important that the inter-layer adhesion within the laminated packaging material, as well as the oxygen gas barrier properties, is maintained also under wet packaging conditions.

According to further embodiment, the packaging container formed from the laminated packaging material may be partly sealed, filled with liquid or semi-liquid food and subsequently sealed, by sealing of the packaging material to itself, optionally in combination with a plastic opening or top part of the package.

To conclude, robust and reliable packages for liquid food packaging for long term shelf-life and storage may be obtained by using the paper substrate, further coated with barrier layers or laminated to further barrier material layers, in laminated packaging materials, as defined by the invention, thanks to the improved properties provided by the paper substrate itself. The laminated packaging material structure works better for the forming into fold-formed packages, both from the improved interaction and adhesion between the paper substrate and the gas barrier material coatings and from any improved contribution to gas barrier properties from the paper substrate, such as when the paper substrate is a stretchable paper substrate, itself.

Examples and description of preferred embodiments

In the following, preferred embodiments of the invention will be described with reference to the drawings, of which:

Fig. 1a-1b schematically show in cross-section embodiments of a stretchable paper substrate for the use according to the invention,

Fig. 1c-1e show SEM images of surfaces and a cross-section of the paper substrate of the invention,

Fig. 2a-2b schematically show in cross-section alternative embodiments of a stretchable paper substrate for use according to the invention,

Fig. 3a-3c show schematic, cross-sectional views of gas-barrier coated paper substrates according to the invention,

Fig. 4a-4b show laminated packaging materials according to the invention, comprising embodiments of the barrier-coated paper substrates of Figures 1a-1b and 2a-2b,

Fig. 5 shows a further embodiment of a laminated packaging material according to the invention, comprising a barrier-coated paper substrate according to Figures 3c or 1a or 1b,

Fig. 6a shows schematically a method, for dispersion coating a base layer or barrier pre-coating composition onto a paper substrate,

Fig. 6b shows schematically a method, for melt (co-) extrusion coating layer(s) of a thermoplastic heat sealable and liquid-tigth polymer onto a web sustrate, to form innermost and outermost layers of a packaging laminate of the invention,

Fig. 7a is showing a diagrammatic view of a plant for physical vapour deposition (PVD) coating, by using a solid metal evaporation piece, onto a paper substrate or film,

Fig. 7b is showing a diagrammatic view of a plant for plasma enhanced chemical vapour deposition (PECVD) coating, by means of a magnetron plasma, onto a paper substrate or film,

Fig. 8a, 8b, 8c and 8d are showing typical examples of packaging containers produced from the laminated packaging material according to the invention, and

Fig.9 is showing the principle of how such packaging containers are manufactured from the packaging laminate in a continuous, roll-fed, form-fill- and seal process,

Examples

Invention Example 1

Invention Example 1A: Paper substrate production

Two pulps were provided: i) an ECF-bleached kraft pulp from softwood (i.e. a mixture of pine and spruce); and ii) an ECF-bleached kraft pulp from hardwood (i.e. birch).

The softwood pulp was refined using high-consistency (HC) refiners at a specific energy of 200 kWh/tonne (net energy input per tonne dry fibre). The HC-refined pulp was then mixed in a mixing chest with a broke pulp comprising a blend of bleached softwood and hardwood pulps (the majority of the broke was obtained from the same paper production). The share of broke in this softwood-based mixture was 10%. The softwood-based mixture was then refined by low-consistency (LC) refining at a specific energy of 80-85 kWh/tonne. This LC refining resulted in a Schopper-Riegler (°SR) according to ISO 5267-1:1999 of ~26 °SR.

The hardwood pulp was separately mixed with the same type of broke and then refined by low consistency refining using a specific energy of 90 kWh/tonne. The share of broke in hardwood-based mixture was 20%. The LC-refined hardwood-based mixture obtained a Schopper-Riegler (°SR) value of ~44 °SR.

To each of the two fiber streams, papermaking chemicals were added (4 kg/tonne of cationic starch, 0.2 kg/tonne of silica, 1.5 kg/tonne of rosin size and 2.2 kg/tonne of alum). The softwood-based mixture was pumped to a bottom ply head box of a two-ply fourdrinier machine, while the hardwood-based mixture was pumped to the top ply head box of the same fourdrinier machine. The dry mass flow through each of the head boxes was similar and adjusted to reach a total grammage of 63 g/m$^2$ prior coating, divided between the bottom ply (33 g/m$^2$) and the top ply (30 g/m2). The vertical slice lip was 33 mm for the bottom ply head box and 18.5 mm for the top ply head box, which reflect relatively low head box consistencies (about 0.14% for the bottom ply and about 0.25 % for the top ply). The wire speed was 608 m/min. In a paper machine specifically adapted for this product, the wire speed can be considerably higher.

The two plies formed on the fourdrinier machine were couched together at a dryness of ~10% and further dewatered using vacuum foils boxes to ~20% dryness before being subjected to wet pressing in a press section having two single felted press nips, wherein the first press had the felt on the top side and the second press had the felt on the bottom side.

After wet pressing, the web was dried in a pre-drying section to a dryness level of ~65% before entering an extensible unit. The extensible unit, which was a double-roll compactor type usually referred to as "Expanda" was operated in such a way that the ingoing web speed was ~638 m/min and the outgoing web speed -581 m/min. Consequently, the paper web was compacted in the machine direction (the paper web became about 9% "shorter"), which increased the strain at break value ("stretchability") of the final paper. The drive groups after the extensible unit were operated at a somewhat increasing speed resulting in a reduction of the MD strain at break value. Directly after the extensible unit the paper web was dried in an after-drying section with conventional steam-heated cylinders to form a paper substrate having a moisture content of ~6%.

Invention Example 1B: Impregnation

The paper substrate from Invention Example 1A was off-line impregnated with an aqueous polyvinyl alcohol (PVOH) composition from both sides in a conventional film press. The type of PVOH was Poval 10/98 (Kuraray) and its concentration in the composition was 10 %. The composition further comprised glyoxal (Cartabond TSI) in an amount of 6 weight-% based on the amount of PVOH. The glyoxal acted as a cross-linker. The viscosity of the composition was 74 mPa*s (measured at 60 °C). The applied amount of PVOH was 1 g/m$^2$ on the top side and 2 g/m$^2$ on the reverse/bottom side. The reason for using a higher amount of PVOH for the reverse/bottom side was that the pulp used for forming the bottom ply had a lower SR number (and hence that the reverse/bottom side had a less dense surface compared to the top side). The PVOH-impregnated paper substrate was dried using hot air to a moisture content of about 8%. Properties of the dried PVOH-impregnated paper substrate are presented in table 1 below.

Invention Example 1C: Supercalendering

The impregnated paper substrate from Invention Example 1B was re-moisturized to 15%. The re-moisturized paper was fed to a pilot off-line multi-nip calender also referred to as a supercalender (the number of nips was 12). Supercalendering was carried out using a surface temperature of 140 °C on the thermo rolls, which could be obtained by means of outside induction heaters, to obtain a stretchable high-density paper. The line load in each nip was 360 kN/m (simulating 400 kN/m in full-scale production) and the speed was 360 m/min (simulating 400 m/min in full-scale production). The total supercalendering nip impulse was -720 kPa·s [#nips x line load / web speed]. The heating from the thermo rolls dried the stretchable high-density paper. The moisture content at wind-up was -5,5%. Properties of the stretchable high-density paper are presented in table 1 below.

Comparative Example 1

This comparative example is not published prior art but forms part of a co-pending patent application.

Comparative Example 1A: Paper substrate production (2-ply paper)

Two pulps were provided: i) an ECF-bleached kraft pulp from softwood (i.e. a mixture of pine and spruce); and ii) an ECF-bleached kraft pulp from hardwood (i.e. birch).

The softwood pulp was refined using high-consistency (HC) refiners at a specific energy of 225 kWh/tonne (net energy input per tonne dry fibre). The HC-refined pulp was then mixed in a mixing chest with a broke pulp comprising a blend of bleached softwood and hardwood pulps (the majority of the broke was obtained from the same paper production). The share of broke in this softwood-based mixture was 30%. The softwood-based mixture was then refined by low-consistency (LC) refining at a specific energy of 75 kWh/tonne. This LC refining resulted in a Schopper-Riegler (°SR) according to ISO 5267-1:1999 of ~30 °SR.

The hardwood pulp was separately mixed with the same type of broke and then refined by low consistency refining using a specific energy of 85 kWh/tonne. The share of broke in hardwood-based mixture was 20%. The LC-refined hardwood-based mixture obtained a Schopper-Riegler (°SR) value of ~38 °SR.

To each of the two fiber streams, papermaking chemicals were added (4 kg/tonne of cationic starch, 0.2 kg/tonne of silica and 0.4 kg/tonne of AKD). The softwood-based mixture was pumped to a bottom ply head box of a two-ply fourdrinier machine, while the hardwood-based mixture was pumped to the top ply head box of the same fourdrinier machine. The dry mass flow through each of the head boxes was the same and adjusted to reach a total grammage of 60 g/m$^2$ prior coating (i.e. 30 g/m$^2$ per ply). The vertical slice lip was 34 mm for the bottom ply head box and 16 mm for the top ply head box, which reflect relatively low head box consistencies (about 0.12% for the bottom ply and about 0.25 % for the top ply). The wire speed was 600 m/min. In a paper machine specifically adapted for this product, the wire speed can be considerably higher.

The two plies formed on the fourdrinier machine were couched together at a dryness of ~10% and further dewatered using vacuum foils boxes to ~20% dryness before being subjected to wet pressing in a press section having two single felted press nips, wherein the first press had the felt on the top side and the second press had the felt on the bottom side.

After wet pressing, the web was dried in a conventional multi-cylinder dryer to form a paper substrate having a moisture content of ~5%. Prior winding up, the paper substrate was calendered in a soft nip at a line load of 20 kN/m.

Comparative Example 1B: Impregnation

The paper substrate from 1A was off-line impregnated with an aqueous polyvinyl alcohol (PVOH) composition from both sides in a conventional film press. The type of PVOH was Poval 10/98 from Kuraray and its concentration in the composition was 10% (in another trial, the concentration was instead 8%, which also provided good results). The composition further comprised glyoxal (Cartabond TSI) in an amount of 6 wt.% compared to the amount of PVOH. The glyoxal acted as a cross-linker. The viscosity of the composition was 74 mPa*s (measured at 60 °C). The applied amount of PVOH was 1 g/m$^2$ on the top side and 2 g/m$^2$ on the reverse/bottom side. The reason for using a higher amount of PVOH for the reverse/bottom side was that the pulp used for forming the bottom ply had a lower SR number (and hence that the reverse/bottom side had a less dense surface compared to the top side). The PVOH-impregnated paper substrate was dried using hot air to a moisture content of 8 %.

Comparative Example 1C: Supercalendering

The impregnated paper substrate from 1B was re-moisturized to 15%. The re-moisturized paper was fed to an off-line multi-nip calender also referred to as a supercalender (the number of nips was 12). Supercalendering was carried using a surface temperature of 140 °C on the thermo rolls, which could be obtained by means of outside induction heaters, to obtain a high-density paper. The line load in each nip was 405 kN/m (simulating 450 kN/m in full-scale production). The total supercalendering nip impulse was ~800 kPa·s [#nips × line load / web speed]. The heating from the thermo rolls dried the high-density paper. The moisture content at wind-up was 8%. Properties of the high-density paper obtained are presented in Table 1 below.

Comparative Example 2: Paper Substrate (single-ply paper)

This comparative example is not published prior art but forms part of a co-pending patent application.

A single-ply paper made for a different purpose, but by a similar process, and having similar properties to the papers of Invention Example 1 and Comparative Example 2, was provided. The single-ply paper was made from a mixture of pulps from Kraft softwood pulp and Kraft hardwood pulp and a small amount of CTMP pulp, to a mixture ratio of 45:45:10. The single-ply paper was impregnated with polyvinyl alcohol from the top side and subsequently calendered to a density of about 1050 kg/m$^3$ with a resulting grammage of 45 g/m$^2$. The top-side surface had a surface roughness of about 25 ml/min Bendtsen.

Comparative Example 3: Paper Substrate (single-ply paper)

A single-ply paper of a similar composition to the paper substrate of Comparative Example 2 was provided. The single-ply paper was impregnated with of polyvinyl alcohol from the top side and calendered to a density of about 1100 kg/m$^3$ with a resulting grammage of 57 g/m$^2$. The top-side surface had a smoothness of lower than 15 ml/min Bendtsen.

Test 1: Resulting properties of paper substrates

Properties of the paper substrates used in Invention Example 1 and Comparative Examples 1-3 are presented in table 1 below. Table 1 further includes paper properties of a commercial greaseproof paper from Nordic Paper, which was tested for a similar purpose of liquid carton packaging in the prior art. The Nordic Paper Super Perga WS paper of Comparative Example 4 was used as a gas-barrier paper substrate in WO 2017/089508.

For Table 1, the following applies:

Grammage was measured according to ISO 536:2019 and has the unit g/m$^2$. Thickness was measured according to ISO 534:2011. Density was measured according to ISO 534:2011 and has the unit kg/m$^3$. Roughness means Bendtsen roughness, was measured according to ISO 8791-2:2013 and has the unit ml/min. Strain at break was measured according to ISO 1924-3:2005, in the machine direction, MD, and/or in the cross direction, CD. Tensile strength index was measured in the MD and the CD according to ISO 1924-3:2005 and has the unit Nm/g. Canadian Standard Freeness, "CSF", which is a measure of fibre drainability was measured by the unit ml according to ISO 5267-2:2001, after repulping according to a Valmet repulping method, using a Valmet pulper of the type HD400. The Valmet repulping method is described in further detail below. °SR was measured according to ISO 5267-1:1999 after repulping according to ISO 5263-1:2004. Recyclability was measured according to PTS method PTS-RH 021/97. The remaining recyclable fibres after screening away of residues was reported. Oxygen transmission rate, (OTR) was measured according to ASTM F1927-14 after lamination with 20 g/m$^2$ LDPE on the top side of the paper and has the unit cm$^3$/m$^2$/24h, 0.2 atm (21%) oxygen.

Table 1

| Paper substrate sample | Prior art: Comp. Example 4 Nordic Paper Super Perga WS | Comp. Ex. 1 | Comp. Ex. 2 | Comp. Ex. 3 | Invention Example 1 |
|---|---|---|---|---|---|
| Grammage | 32$^§$ | 63 | 45 | 57 | 65 |
| Density | 865$^§$ | 1100 | 1050 | 1100 | 1082 |
| Strain at break (MD) | 1.4% | 2.3% | 1.5% | 1.8% | 5.2% |
| Strain at break (CD) | 2.1% | 6.4% | 4.7% | 3.9% | 6.9% |
| Roughness | 290 | 50 | 25 | 14 | 25 |
| Tensile index (MD/CD) | 94/41 | 133/70 | 112/44 | | 103/68 |
| CSF paper (20 min) | 53* (38 g/m$^2$) | 277 | 267 | 255 | |
| °SR | 74** | 40.5 | | 28.5 | |
| PTS recyclability (%) | | | 84.5 | | 99.4 |

(continued)

| Paper substrate sample | Prior art: Comp. Example 4 Nordic Paper Super Perga WS | Comp. Ex. 1 | Comp. Ex. 2 | Comp. Ex. 3 | Invention Example 1 |
|---|---|---|---|---|---|
| OTR 23°C, 50% RH, 0.2 atm $O_2$ | 42* | 6.1 (4.5$^{¤}$) | 9.2 | 9.3 | 10.5 |
| OTR 23°C, 80% RH, 0.2 atm $O_2$ | | 13.9 (15.3$^{¤}$) | 12.6 | | 20 |

§ According to the supplier's data sheet
¤ Tested on the high-density paper that had been impregnated with 1.5 g/m² PVOH on each side.
* The grammage was 38 g/m² instead of 32 g/m²
** The grammage was 45 g/m² instead of 32 g/m²

The Valmet repulping method was carried out as described in the following. Repulping of the papers was carried out by using a Valmet pulper of the type HD400, that is used for stock preparation, i.e. fiber disintegration. Agitation was done with an impeller with three radial and serrated blades with the dimensions 30 by 40 mm rotating at a speed of 3000 rpm. The paper was cut in 90 by 90 mm pieces. 0.5 kg of air-dried paper pieces was mixed with 10 liters of water, i.e. to a consistency of 5%, and repulped at 2.5 minutes at a temperature of 57 deg C. Then 5 liters of water was added, providing a consistency of 3.3 %, and further repulping at another 17.5 minutes at a temperature of 57 deg C was performed. Total repulping time was thus 20 minutes.

Determination of Canadian Standard Freeness of pulp: The pulp obtained from the above Valmet repulping method was diluted to -0,3% and Canadian Standard Freeness tested according to ISO 5267-2:2001.

As can be seen in Table 1, the paper substrate used in Invention Example 1 has very similar properties to the papers from Comparative Examples 1-3, except for the strain at break in MD, which is higher due to the compacting of the paper in the extensible unit during paper manufacturing.

Test 2: Laminated materials and packaging containers

The paper substrates for Comparative Examples 1 and 2, were further dispersion coated twice with intermediate and subsequent drying operations, to provide 3 g/m² of continuous, uninterrupted PVOH coating on the paper substrates. The PVOH-coated paper substrates were further metallised to an optical density of about 2.

The thus gas-barrier coated paper substrates were further coated by 20 g/m² of LDPE onto the metallisation coating and OTR was measured in the same way as in Table 1. The OTR values of the coated papers of Comparative examples 1 and 2, measured under the conditions of 23 °C and 80 % Relative Humidity (RH), were not significantly higher than the OTR values measured at 23 °C and 50 % RH (regarding the barrier-coated substrates for Comparative Example 1 the OTR at both 23/50 and 23/80 conditions was about 0.34 cm³/m²/24h, 0.2 atm. Regarding Comparative Example 2 the OTR at the two conditions was 0.25 and 0.27 cm³/m²/24h, 0.2 atm, respectively, i.e. there was only a very small change within the error margin).

The paper substrate used in Invention Example 1 was also dispersion coated twice with intermediate and subsequent drying operations, to provide 3 g/m² of continuous, uninterrupted PVOH coating on the paper substrates. The PVOH-coated paper substrates was further metallised to an optical density of about 2.2 and further coated with 20 g/m² LDPE as above. Also in this case, there was no significant increase of OTR measured at 23 °C and 80 % RH, compared to at 23 °C and 50 % RH (OTR increased merely from 0.31 to 0.34 cm³/m²/24h, 0.2 atm (21%) oxygen).

It was thus concluded that the paper barrier material according to the invention is not more sensitive to higher moisture conditions than the similar, recently developed paper barriers which had a lower, conventional strain break in the MD, i.e. not "being stretchable".

Laminated packaging materials comprising the barrier-coated paper substrates according to Comparative Examples 1 and 2 and Invention Example 1 were then produced according to the layer structure

*/LDPE 12 g/m² / paperboard 80 mN /LDPE 15 or 20 g/m² / paper*

*substrate +PVOH+met/ Adhesive EAA copolymer 6 g/m² + 19 or 29 g/m²*

*blend LDPE + mLLDPE /*

Packages were produced in a Tetra Pak® E3/CompactFlex filling machine. This type of filling machine has the capacity to fill portion packages at a speed of 9000 packages/hour and a flexibility that allows for quick change between different package formats. Packages were in the format of Tetra Brik® with a volume of 200 ml.

No major problems regarding packaging integrity (i.e. package tightness vs the surrounding environment) and sealing performance were identified during the trials, which therefore were considered successful.

Oxygen transmission rate of flat packaging material was measured using a coulometric detector according to the standard ASTM F1927-14. The moisture level is either 50% or 80% relative humidity. The unit is $cm^3/m^2/24h$, with the option of using 0.2 atm or 1 atm of oxygen pressure. To be able to compare OTR values measured at 1 atm with OTR values measured at 0.2 atm, the former values can be multiplied with 0.2.

The Oxygen transmission rate of packages (filled, emptied and dried) was measured according to ASTM F1307-14, at 0.2 atm (surrounding air containing 21 % oxygen). The unit is $cm^3/package/24h$.

The package is mounted on a special holder; inside the package nitrogen is purged; the outside of the package is exposed to the environment surrounding the instrument. When oxygen permeates through the package into the nitrogen carrier gas, it is transported to the coulometric sensor. The sensor reads how much oxygen is leaking into the nitrogen gas inside the package.

The 32 g/m² greaseproof paper from Nordic Paper, Super Perga® WS was used to prepare Comparative Examples 4-1 and 4-2 (being prior art and reference examples of laminated packaging materials). (The Super Perga® WS of 38 g/m² was used in Comparative Example 6 in Table 3.)

Properties of the laminated packaging materials are presented in table 2 below.

Table 2

| Packaging laminates/ paper substrate samples | Compara tive Example 4-1: Nordic Paper Superper ga WS FL109 GPP * 32 g/m² | Compara tive Example 4-2: Nordic Paper Superper ga WS FL109 GPP** 32 g/m² | Compara tive Example 1: ** 63 gsm | Compara tive Example 2: *** 45 gsm | Invention Example 1: Compacted Paper substrate **** 65 gsm |
|---|---|---|---|---|---|
| Strain at break in MD of paper substrate used | 1.4 % | 1.4 % | 2.3 % | 1.8 % | 5.7 % |
| Principal laminate structure: /LDPE/ paperboard /LDPE/ paper substrate +PVOH+met/ inside PE polymers/ | 260 mN paperbo ard; 1 g/m² PVOH; Met to OD 2.5; | 80 mN paperbo ard 1.5 g/m² PVOH; Met to OD ~2.3; | 80 mN paperbo ard 3 g/m² PVOH; Met to OD ~2; | 80 mN paperbo ard 3 g/m² PVOH; Met to OD ~2; | 80 mN paperboard 3 g/m² PVOH; Met to OD ~2.2; |
| Package format | Tetra Brik® Aseptic 1000B | Tetra Brik® Aseptic 200S | Tetra Brik® Aseptic 200S | Tetra Brik® Aseptic 200S | Tetra Brik® Aseptic 200S |
| Package volume | 1000 ml | 200 ml | 200 ml | 200 ml | 200 ml |
| Laminate area per package | 0.077 | 0.030 | 0.030 | 0.030 | 0.030 |
| Flat laminate OTR 1 atm, 23 °C, 50% RH | 0.4 measured | 1.3 measure d | | | |
| Flat laminate OTR 1 atm, 23 °C, 80% RH | 0.4 measure d | 1.3 measure d | | | |
| Flat laminate OTR 0.2 atm, 23 °C, 50% RH | 0.080 calculate d | 0.26 calculate d | 0.165 measure d | 0.240 measure d | 0.28 measured |

(continued)

| Packaging laminates/ paper substrate samples | Comparative Example 4-1: Nordic Paper Superper ga WS FL109 GPP * 32 g/m² | Comparative Example 4-2: Nordic Paper Superper ga WS FL109 GPP** 32 g/m² | Comparative Example 1: ** 63 gsm | Comparative Example 2: *** 45 gsm | Invention Example 1: Compacted Paper substrate **** 65 gsm |
|---|---|---|---|---|---|
| Flat laminate OTR 0.2 atm, 23 °C, 80% RH | 0.080 calculated | 0.26 calculated | 0.245 measured | 0.190 measured | |
| Calculation of loss: | | | | | |
| Calculated, theoretical OTR per package, 0.2 atm, 23 °C, 50% RH | 0.0062 | 0.0078 | 0.0050 | 0.0072 | 0.008 |
| Calculated, theoretical OTR per package, 0.2 atm, 23 °C, 80% RH | 0.0062 | 0.0078 | 0.0074 | 0.0057 | - |
| | | | | | |
| Measured OTR per package 0.2 atm, 23 °C, 50% RH | 0.06 | 0.075 | 0.029 | 0.030 | 0.018 |
| Measured OTR per package 0.2 atm, 23 °C, 80% RH | | | 0.028 | 0.0315 | |
| | | | | | |
| Loss factor measured/ theoretical, 23 °C, 50% RH | 9.7 | 9.6 | 5.8 | 4.2 | 2.2 |
| Loss factor measured/ theoretical, 23 °C, 80% RH | | | 3.8 | 5.5 | |

* /LDPE 12 g/m²/ paperboard 260 mN /LDPE 20 g/m²/ paper substrate +PVOH+met/ LDPE 20 g/m² /LDPE+mLLDPE 20 g/m² / ** /LDPE 12 g/m²/ paperboard 80 mN /LDPE 20 g/m²/ paper substrate + PVOH+met/ LDPE 40 g/m² / *** /LDPE 12 g/m²/ paperboard 80 mN /LDPE 20 g/m²/ paper substrate +PVOH+met/ Adhesive EAA copolymer 6 g/m² + 29 g/m² blend LDPE + mLLDPE / **** /LDPE 12 g/m2/ paperboard 80 mN /LDPE 15 g/m2/ paper substrate +PVOH+met/ Adhesive EAA copolymer 6 g/m2 + 19 g/m2 blend LDPE + mLLDPE /

Although there is a difference between the comparative examples and the example according to the invention in the amount of thermoplastic polyethylene-based polymers of the layers facing the inside of the package, i.e. 40 or 35 g/m² and 25 g/m², respectively, this has no practical influence for the comparison of oxygen transmission rate through flat, unfolded materials, since polyethylene is a poor oxygen barrier in relation to the paper substrates with their applied impregnation and/or coatings. Typical oxygen transmission rate for LDPE of 40 $\mu$m thickness is 600-900 cm³/m²/24h/0.2 atm at 23 °C. Moreover, if thicker polyethylene layers would be considered to be more advantageous for reducing OTR, these results show that there seems to be no such effect. The positive effect is derivable to the gas-barrier coated paper material above all, and in this case to the paper substrate onto which the barrier coatings were applied.

As shown in table 2, the inventive paper substrate (Invention Example 1) not only provides the laminated material of the lowest measured OTR after forming packages, but it also provides the laminate of the lowest loss factor, which demonstrates a further improvement of the robustness at the formation of packaging containers. A low OTR value for a flat material is of less value in oxygen-sensitive packaging if the OTR value increases too much after folding and formaton into filled three-dimensional packages.

Test 3: Recyclability

Table 3

| Repulpability of laminated packaging materials | Comp. Ex. 5 Aluminium foil Prior art reference material ¤ | Comp. Ex. 6, Prior art reference material, NP Superperga WS 38 gsm Parchment FL109 GPP ¤¤ | Comparative Example 1 ¤¤ | Comparative Example 3: ¤¤ |
|---|---|---|---|---|
| Laminate | 80 mN paperboard; TBA 200 ml 6.3 $\mu$m Al-foil | 80 mN paperboard; TBA 200 ml 1 g/m$^2$ PVOH; Met to OD 2.5; | 80 mN paperboard TBA 200 ml 3 g/m$^2$ PVOH; Met to OD ~2; | 80 mN paperboard TBA 200 ml 3 g/m$^2$ PVOH; Met to OD ~2; |
| Coarse reject (wt-%) As repulped by Valmet pulper, 20 min | 29 | - | 26 (18 after 50 minutes) | 18 |
| Coarse reject (wt-%) As re-pulped by contracted supplier: | 39.8 | 40.2 | - | - |
| ¤ / LDPE 12 g/m2/ paperboard 80 mN /LDPE 20 g/m2/ Al-foil 6.3 $\mu$m / Adhesive EAA copolymer 6 g/m2 + 19 g/m2 blend LDPE + mLLDPE / <br> ¤¤/LDPE 12 g/m2/ paperboard 80 mN /LDPE 20 g/m2/ paper substrate +PVOH+met/ Adhesive EAA copolymer 6 g/m2 + 19 g/m2 blend LDPE + mLLDPE / | | | | |

A coarse reject, i.e. the non-fibrous recyclable part of the laminated materials, being polymers, aluminium foil and some non-detachable fibres, was determined after re-pulping by a Valmet pulper. The re-pulping was carried out in the same way as regarding the determination of CSF values from re-pulping of the sole paper substrates in Table 1 above, except that the laminated packaging material to be re-pulped and analyzed was first cut into pieces of 30 by 90 mm. The coarse reject was screened away by using a plate with holes of diameter 10 mm, and then dried to 0 % moisture content and calculated as weight percent of dry (0 % moisture) material introduced into the pulper.

The coarse reject as determined by a contracted global industrial supplier of equipment for fiber processing and recycling, was made in a similar way, however mixing 20 g of laminated material into 2 l of water, and by disintegrating to a consistency of about 1 %, instead of 3.3 %, for 18 minutes. The water temperature was also in this re-pulping test kept at 57 °C.

It is confirmed by the above that the previously explored paper substrates for oxygen barrier coatings of the prior art, capable of generating comparatively high oxygen barrier levels in laminated packaging materials as well as in filled and sealed packages therefrom, do not, however, lead to a reduced amount of rejected material in existing recycling processes, such as in recycling of used beverage cartons. Although, aluminium foil as a raw material may be avoided, the amount of material to be wasted or incinerated (coarse reject) would be equally high from recycling of the material, as tested by the above recycling firm, as seen in Comparative Example 6 vs Comparative Example 5 .

A comparative determination of prior art paper-based barrier laminates has not been performed by the Valmet pulper and the re-pulping method described above, but it is expected, based on the results of Comparative Examples 6 and 5, that also the Valmet method would generate a similarly high proportion of coarse reject to the tested reference aluminium foil material. The laminated materials of Comparative Examples 1 and 3, on the other hand, exhibit a significantly lowered proportion of reject, such as lower than 20 wt-% coarse reject. Laminated materials comprising the paper substrate of Comparative Example 1, as presented in Table 3, seems to need a little longer re-pulping time of the laminated material, in comparison to laminated materials according to Comparative Example 3, but will anyway be equally disintegrated after a longer repulping time such as in this case 50 minutes, with the same resulting low proportion of coarse reject. The laminated material tested for re-pulping in Comparative Example 3 comprises a paper substrate having a similar composition as the one in Comparative Example 2, but a higher grammage. It is expected that the laminated packaging material of Comparative Example 2, would generate a similarly low amount of coarse reject.

It is also expected that a laminated material comprising the barrier-coated, high-density, stretchable paper substrate of Invention Example 1, as presented in Table 2, would have at least equal repulpability to the one of Comparative Example 1 in Table 3, i.e. have significantly improved recycling and repulpability properties in comparison to the prior art reference materials (Comparative Examples 5 and 6 (as well as Comparative Examples 4-1 and 4-2), because the high-density paper substrate of Invention Example 1 has very similar fibre content, composition and configuration, and because the structure of the laminated material is the same.

Conclusions

Filled 200 ml packages made from standard laminates of the coated papers of the Comparative Examples 1 and 2 of a co-pending and not yet published patent application, show generally a very low level of oxygen transmission of about 0.03 $cm^3/m2/$ day/ 0.2 atm, at 23 °C, 50%RH. Furthermore, the values do not seem to significantly deteriorate at an environment of 23 °C, 80 % RH. The OTR testing was carried out 2-3 weeks after production of the filled and sealed packages. The oxygen transmission in a 200 ml package of 0.03 provides an about 2-3 times better shelf life for oxygen sensitive products, than would an oxygen transmission of about 0.075, as of the Comparative Example 4-2 (i.e. the Prior art Reference).

The oxygen transmission in a 200 ml package made from a laminated material in accordance with Invention Example 1 of the present invention is even further improved to be lower than 0.02, and provides accordingly a more than four times better shelf life than that obtained from Comparative Example 4-2 (i.e. the Prior art Reference). The OTR of a laminated material (as measured on flat laminated material) of the Comparative Examples 1 and 2 and of Invention Example 1 of the present invention is at least as good as similar paper-based barrier laminates of the prior art.

Above all, however, the recently developed and inventive materials do not exhibit the same extent of loss of oxygen barrier properties from the transformation of the laminated material into filled, formed and heat-sealed packaging containers. This effect is not attributable to the fact that the amount of coated PVOH is higher, however. The difference in PVOH coating weight may increase the oxygen barrier properties of a planar laminated (unfolded) material, but it cannot explain that improved oxygen barrier in filled and sealed packages are also obtained beyond minor improvement levels.

Generally, the packaging integrity has proved to be good with the paper-based barriers of the Comparative Examples 1 and 2, and of Example 1 in accordance with the present invention. It has furthermore been seen that the package integrity improves as the paper substrate grammage is lower, such as at from 30 to 65 $g/m^2$, such as at from 35 to 60 $g/m^2$, such as at from 35 to 55 $g/m^2$, such as at from 35 to 50 $g/m^2$. The thickness of the paper substrate should thus preferably be from 30 to 60 $\mu$m, such as from 30 to 55 $\mu$m, such as from 30 to 50 $\mu$m, such as from 30 to 45 $\mu$m. If a coated, not stretchable, paper substrate is thicker, more polymer in the thermoplastic, heat sealable layers is needed in order to make tight and durable seals, when transforming the laminated material into filled and sealed, cuboid-shaped packages. A thinner paper substrate thus enables a lower proportion of thermoplastic polymers needed in the total packaging laminate, which is of high importance as packaging materials need to be adapted in the future to recycling streams of very high fibre content, such that the materials may be recycled to be used again, rather than being turned into waste.

Stretchable paper substrates also show this effect, and it is expected that an altogether thinner and more stretchable paper substrate will provide even better results, such that the content of thermoplastic, heat-sealable polymer content in the laminated packaging material may be reduced even further.

Furthermore, the impregnated high-density paper substrates of Comparative Examples 1 and 2 provided for laminated materials having improved recycling and re-pulpability properties, both as compared to aluminium-foil based packaging materials and to laminated packaging materials based on non-aluminium-foil gas-barriers. The recycling and repulpability properties of a high-density, stretchable paper as of Invention Example 1 are expected to be at a similarly good level, as the configuration and cellulose content of the paper itself is very similar. The operation of making the paper substrate more extensible, i.e. stretchable, i.e. having a high strain at break in the machine direction (MD), by e.g. an Expanda extensible unit is not expected to alter the re-pulpability properties. This improvement further supports the development of more sustainable packaging materials, altogether. It enables a higher fibre-based content also in laminated packaging materials for packaging of products that are very sensitive to oxygen, such as for example fruit juices and other fruit- or vegetable-based food having a natural content of vitamin C to preserve.

Relating to the attached figures:

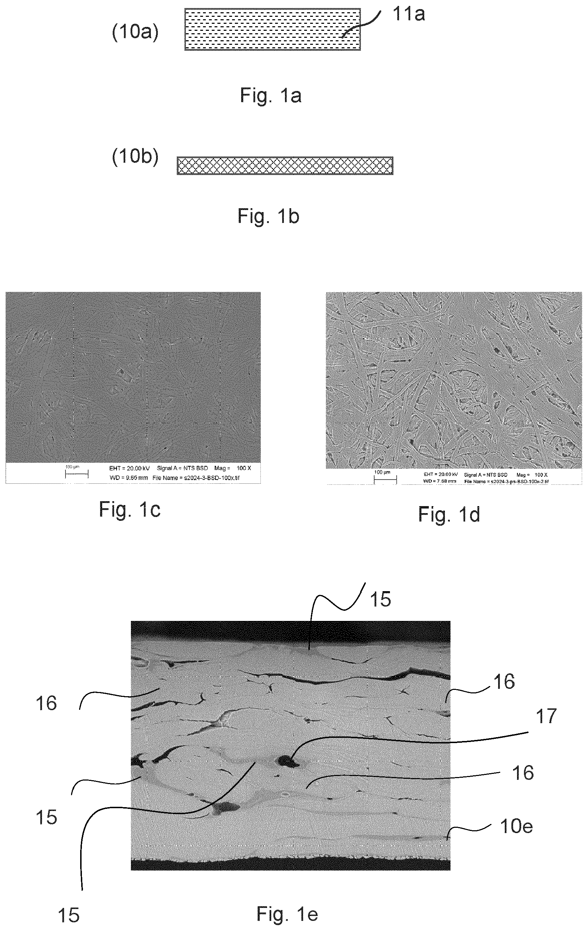

In Fig. 1a, there is shown, in cross-section, an embodiment of a paper substrate 10a, of the invention. The paper substrate 10a is made from a majority of Kraft cellulose fibres that are moderately refined to obtain good recycling properties of the paper. It is further provided with a stretchability in the machine direction of at least 3 %. It is impregnated 11a with a polyvinylalcohol having a high degree of hydrolysis, in a film-press operation during the paper manufacturing process. The amount dry weight of impregnated PVOH from the top-side is about 1-1,5 $g/m^2$. The paper substrate may impregnated from both the top-side and the back-side surfaces, with a total of about 2-4 $g/m^2$ of PVOH and/ or starch, such as a combination of PVOH from the top side and starch from the back-side.

Fig. 1b shows in cross-section an embodiment of a high-density, stretchable paper substrate 10b, of the invention, obtained by a method wherein the impregnated paper substrate 10a of Fig 1a has been supercalendered at high pressure and an elevated temperature to obtain the thinner and denser, stretchable paper substrate.

Fig. 1c shows a SEM image of a surface portion of a preferred paper substrate of the invention, as formed, wet-pressed, dried, compacted, further dried, impregnated with PVOH, super- calendered and subsequently also coated with a continuous gas-barrier coating of about 3 g/m$^2$ of PVOH,

Fig. 1d shows a SEM image of a surface portion of the same preferred, compacted, PVOH-impregnated and supercalendered, but not further gas-barrier coated, paper substrate. As shown in figure 1d, the PVOH from the impregnation has not formed a film or continuous coating on the surface portion. The impregnated PVOH has penetrated into the fiber web. The impregnated paper substrate used in Comparative Example 1 exhibited a similar surface, i.e. it could not be seen that the PVOH had formed a film or continuous coating on the surface portion of the paper.

Fig. 1e shows a SEM image of a cross section 10e of the non-stretchable high-density paper substrate used in Comparative Example 1. The dark grey areas 15 are PVOH and light grey areas 16 are fibers. There are also unfilled pores 17. Consequently, the high-density comparative paper is not saturated with PVOH. However, figure 1e shows that there is PVOH present within the fiber web, and from an image taken of the paper surface, it is understood that most of the PVOH is present within the fiber bulk of the paper. Only a minor portion of the PVOH is found on the surface of the paper. In view of figures 1c and 1d above, it seems plausible that this is the case also in a similar but compacted, stretchable paper, made from similar cellulose fibres and by a similar method. As shown above, even further improved gas barrier properties in a fold-formed packaging container results from the gas-barrier coated, compacted paper of the invention, produced in an otherwise very similar way, compared to Comparative Example 1.

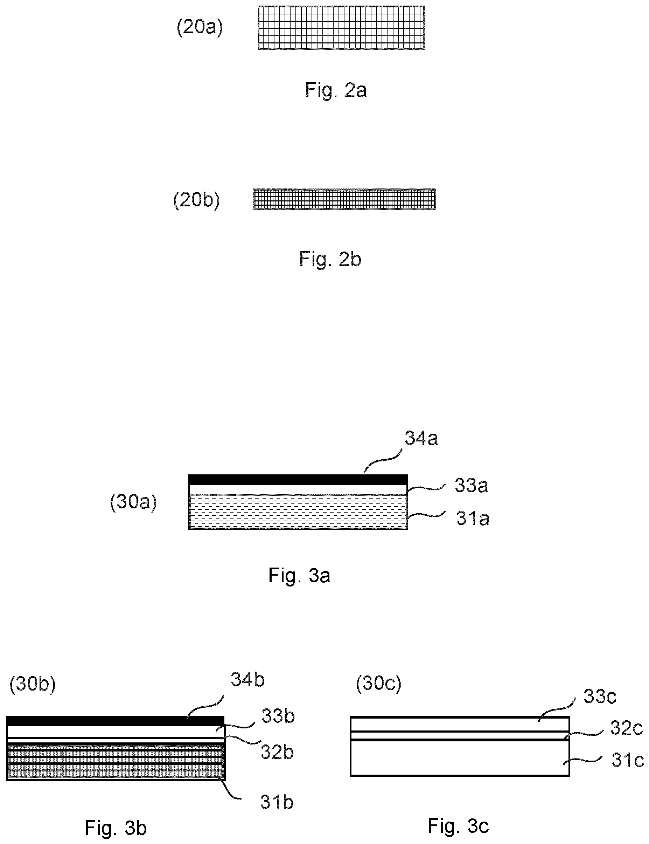

In Fig. 2a, there is shown, in cross-section, an embodiment of a similar stretchable paper substrate 20a, to the one shown in Fig. 1a. The same, compacted paper web as manufactured for Fig. 1a and Fig. 1b, is dewatered, wet pressed and dried to form a stretchable paper substrate without the further impregnation with a polymer in a size press step.

Fig. 2b shows in cross-section an embodiment of a high-density stretchable paper substrate 20b, obtained by a method wherein the stretchable paper substrate 20a of Fig 2a has been further supercalendered at high pressure and an elevated temperature to obtain the thinner and denser, stretchable paper substrate.

In Fig. 3a, there is shown, in cross-section, an embodiment of a gas-barrier coated stretchable paper substrate 30a, of the invention. The stretchable paper substrate 31a; 31b, taken from of Fig. 1a or preferably from Fig. 1b (the proportions of layer thicknesses in Figures 1-5 are not be taken to reflect real thicknesses and relative thickness proportions), is first coated with an aqueous gas barrier composition comprising PVOH in two coating steps with intermediate and subsequent drying steps, such that a layer 33a of two times 1,5 g/m$^2$, i.e. 3 g/m$^2$, is applied, in total, dry weight.

The thus PVOH-coated, stretchable paper substrate 30a (i.e. comprising 31a and 33a), further has a vapour deposition coating of an aluminium metallisation 34a, on top of the PVOH coating 33a. This barrier coating configuration in combination with the stretchable paper substrate provides for a gas-barrier laminate portion, enabling a non-foil laminated packaging material (i.e. a laminated packaging material free from the conventional micrometer-thick (5-10 μm) aluminium foil or other metal foil), and provides for high and durable gas barrier properties in a fold-formed, filled and heat-sealed packaging container made from such a non-foil packaging material.

Fig. 3b shows a further embodiment of a gas-barrier coated stretchable paper substrate 30b, of the invention, wherein the stretchable paper substrate 20a or 20b from Fig. 2a or 2b may be used. Instead of having the impregnated polymer in the fibrous interior of the paper substrate, the paper substrate is pre-coated with a base coating 32b comprising a polymer composition imparting greater smoothness and/or surface quality to the multilayer paper substrate barrier structure. The gas barrier coatings of PVOH 33b and the subsequent metallisation coating 34b are applied in the same way and at the same amounts as in Fig. 3a, onto the base coating 32b. The base-coating forms a "bridge" to the stretchable paper substrate. Improved properties may be obtained to a similar degree as with the impregnated, gas barrier coated, paper substrate 30a.

Fig. 3c shows a further embodiment of a gas-barrier coated stretchable paper substrate 30c, of the invention, corresponding to the PVOH-coated, paper substrate in Fig. 3a or Fig.3b before the final vapour deposition coating with a metallised coating (the base or pre-coating 32c being optional). This is another variant of a paper-based gas barrier material, which may be combined with, and laminated to, a further, complementary barrier material in a laminated packaging material, such as with a polymer film having a vapour deposited barrier coating applied onto it. Such a laminated packaging material, will also provide for better and more durable, non-foil gas barrier properties in a fold-formed, filled and heat-sealed packaging container, thanks to the increased high stretchability in the machine direction of the paper substrate 31c.

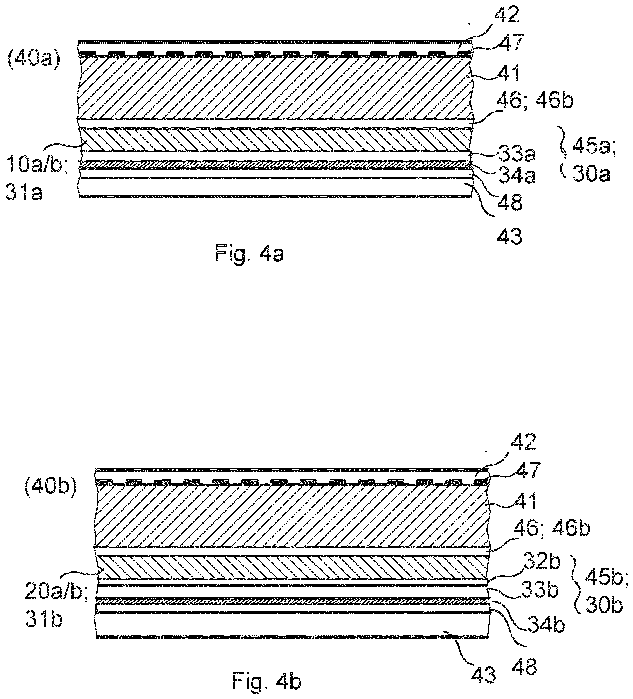

In Fig. 4a, a laminated packaging material 40a for liquid carton packaging is shown, in which the laminated material comprises a paperboard bulk layer 41 of paperboard, having a bending force of 80 mN and a grammage weight of about 200 g/m$^2$, and further comprising an outer liquid tight and heat sealable layer 42 of polyolefin applied on the outside of the bulk layer 41, which side is to be directed towards the outside of a packaging container produced from the packaging laminate. The layer 42 is transparent to show the printed décor pattern 47, applied onto the bulk layer of paper or paperboard, to the outside, thus informing about the contents of the package, the packaging brand and other information targeting consumers in retail facilities and food shops. The polyolefin of the outer layer 42 is a conventional low density polyethylene (LDPE) of a heat sealable quality, but could also include further similar polymers, including LLDPEs. It is applied at an amount of about 12 g/m². An innermost liquid tight and heat sealable layer 43 is arranged on the opposite side of the bulk layer 41, which is to be directed towards the inside of a packaging container produced from the packaging laminate, i.e. the layer 43 will be in direct contact with the packaged product. The thus innermost heat sealable layer 43, which is to form strong transversal heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE). It is applied at an amount of about 19 g/m².

The bulk layer 41 is laminated to the uncoated side of the barrier-coated paper substrate 30a from Fig. 3a, i.e. 45a, by an intermediate bonding layer 46 of a low density polyethylene (LDPE). The intermediate bonding layer 46 is formed by means of melt extruding it as a thin polymer melt curtain between the two paper webs and thus laminating the bulk layer and the barrier-coated paper substrate to each other, as all three layers pass through a cooled press roller nip. The thickness of the intermediate bonding layer 46 is from 12 to 22 μm, such as from 12-18 μm.

The innermost heat sealable layer 43 may consist of one layer or alternatively of two or more part-layers of the same or different kinds of LDPE or LLDPE or blends thereof, and is well adhered to the metallised barrier deposition coating surface 34a of the barrier-coated paper substrate 45a, i.e. 30a, by an intermediate coextruded tie or adhesive polymer layer 48, e.g. of ethylene acrylic acid copolymer (EAA) which thus binds the innermost heat sealable layer(s) 43 to the barrier coated paper substrate 30a, by applying the tie layer 48 of from 5 to 7 g/m² and the innermost layer(s) 43 together in a single melt coextrusion coating step.

Alternatively, the bulk layer 41 may be laminated to the barrier-coated paper substrate described in Fig. 3a, by means of wet lamination with an intermediate bonding layer 46b of a thin layer of adhesive polymer, obtained by applying an aqueous dispersion of for example PVOH, starch or a polyvinyl acetate adhesive onto one of the surfaces to be adhered to each other and subsequently pressing together in a roller nip. Thanks to the absorbing bulk layer of a comparatively thick cellulose structure, this lamination step may be performed in an efficient cold or ambient lamination step at industrial speed without energy-consuming drying operations, which normally are needed to accelerate the evaporation of water. The dry amount applied of the intermediate bonding layer 46b is of a few g/m² only, such as from 2 to 6 g/m², such that there is no need for drying and evaporation.

Thus, the amount of thermoplastic polymer can be significantly reduced in this lamination layer, in comparison to the conventional melt extrusion laminated bonding layer of polyethylene 46.

In Fig. 4b, in an alternative embodiment, the gas-barrier coated paper substrate 30b, shown in Fig. 3b, is laminated into the same laminated structure in the same way as in Fig. 4a, as the gas barrier-coated structure 45b, instead of the gas-barrier coated paper substrate 30a.

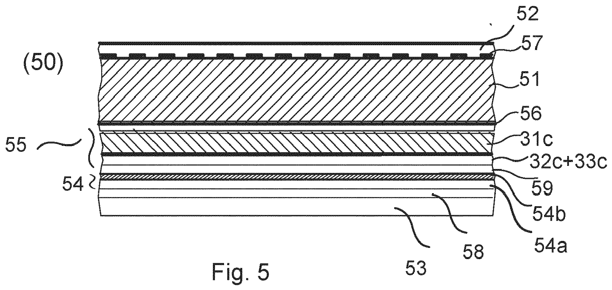

In Fig. 5 is shown a further emodiment of a laminated packaging material 50 of the invention, for liquid carton packaging, in which the laminated material comprises a paperboard core layer 51, having a bending force of 80 mN and a grammage weight of about 200 g/m², and further comprising an outer liquid tight and heat sealable layer 52 of polyolefin applied on the outside of the bulk layer 51, which side is to be directed towards the outside of a packaging container produced from the packaging laminate. The polyolefin of the outer layer 52 is a conventional low density polyethylene (LDPE) of a heat sealable quality and has been applied at an amount of 12 g/m², but may include further similar polymers, including LLDPEs.

An innermost liquid tight and heat sealable layer 53 is arranged on the opposite side of the bulk layer 51, which is to be directed towards the inside of a packaging container produced from the packaging laminate, i.e. the layer 53 will be in direct contact with the packaged product. The thus innermost heat sealable layer 53, which is to form strong heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE).

The barrier-coated paper substrate 30c of Fig. 3c, is further laminated to a complementary barrier film 54, comprising a polymer film substrate 54a, being a film of biaxially oriented polypropylene, BOPP, coated with a vapour deposited barrier coating 54b, being an aluminium metallised coating, by melt extrusion lamination with an intermediate bonding layer 59 of a low density polyethylene (LDPE). By such a laminated material, a moisture-sensitive gas barrier coating, such as a PVOH coating, may be protected by the further metallisation coating of the metallised polymer film, positioned towards the inside of a laminated material, i.e. towards the side which is closer to a filled liquid or wet food product.

The bulk layer 51 is laminated to the un-coated, not laminated, side of the barrier-coated paper substrate 30c of Fig. 3c, by means of wet lamination with an intermediate bonding layer 56 of a thin layer of adhesive polymer, obtained by applying an aqueous dispersion of a PVOH or polyvinyl acetate adhesive onto one of the surfaces to be adhered to each other and subsequently pressing together in a roller nip. This lamination step may thus also be performed in an efficient cold or ambient lamination step as described in Fig. 4b, by an intermediate bonding layer 56 of a few g/m$^2$ only, such that there is no need for drying and evaporation.

Thus, the amount of thermoplastic polymer can still be reduced also in this laminated packaging material, in the lamination layer, in comparison to a conventional melt extrusion laminated bonding layer of polyethylene, as described in Fig. 4a.

The innermost layer 53 is applied onto the barrier-coated film 54, optionally together with an adjacent adhesive polymer layer 58 in a coextrusion coating operation.

According to further embodiments, not shown, the un-coated paper substrates 10a or 10b of Fig. 1a or 1b, or the paper substrates 20a or 20b of Fig. 2a or 2b, may be laminated into the same laminated material structure described above, instead of the gas-barrier coated paper substrate 30c, as the barrier structure 45.

The paper substrates having an increased strain-at-break in the machine direction add flexibility to the laminated packaging material, which supports and relieves the various gas barrier coatings and layers in the laminated material upon folding and forming into cubiod packaging containers for liquid carton packaging.

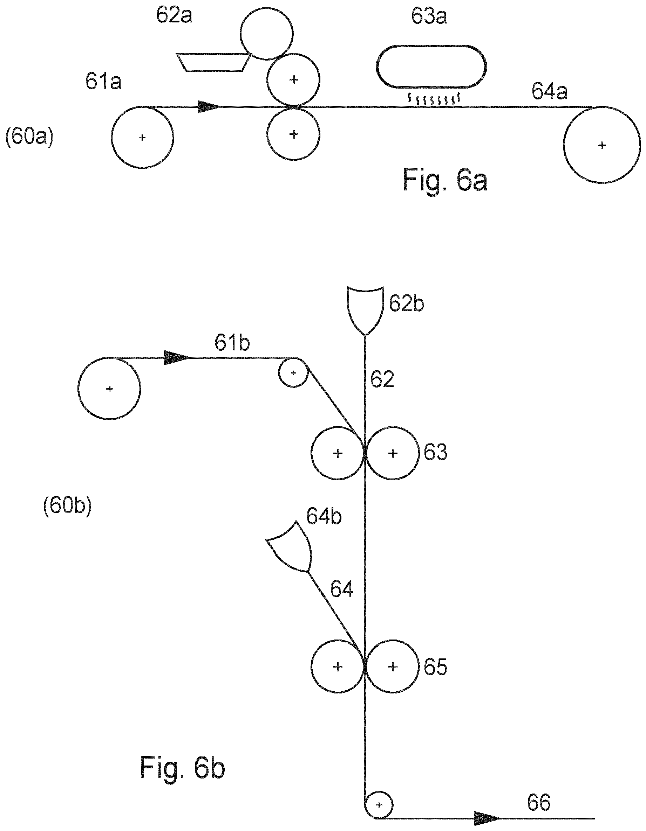

In Fig. 6a, a process of aqueous dispersion coating 60a is shown, which may be used for applying a gas barrier coating 12 from an aqueous gas barrier composition onto a substrate, or an aqueous adhesive composition for wet laminating two webs together, of which at least one web has a fibrous cellulose surface. The paper substrate web 61a (e.g. the paper substrate 11a; 11b from Fig. 1, or the paper substrate 21a; 21b from Fig. 2) is forwarded to the dispersion coating station 62a, where the aqueous dispersion composition is applied by means of rollers onto the top-side surface of the substrate. The aqueous composition has an aqueous content of from 80 to 99 weight-%, and there will be a lot of water on the wet coated substrate that needs to be dried by heat, and evaporated off, to form a continuous coating, which is homogenous and has an even quality with respect to barrier properties and surface properties, i.e. evenness and wettability. The drying is carried out by a hot air dryer 63a, which also allows the moisture to evaporate and be removed from the surface of the paper substrate. The substrate temperature as it travels through the dryer, is kept constant at a temperature of from 60 to 80 °C. Alternatively, dyring may be partly assisted by irradiation heat from infrared IR-lamps, in combination with hot air convection drying.

The resulting barrier-coated paper substrate web 64a is forwarded to cool off and is wounded onto a reel for intermediate storage and later further vapour deposition coating of a barrier deposition coating onto the paper substrate 64a.

Fig. 6b shows a process (60b) for the final lamination steps in the manufacturing of a laminated packaging material, such as 40a, 40b or 50, of Fig. 4 and 5, respectively, after that the bulk layer 41, 51 first has been laminated to a barrier-coated paper substrate from Fig. 3.

The bulk layer paperboard may have been laminated to the barrier-coated paper substrate by means of wet, cold dispersion adhesive lamination, or by means of melt extrusion lamination.

The resulting paper pre-laminate web 61b is forwarded from an intermediate storage reel, or directly from the lamination station for laminating the paper pre-laminate. The non-laminated side of the bulk layer 41;51, i.e. its print side, is joined at a cooled roller nip 63 to a molten polymer curtain 62 of the LDPE, which is to form the outermost layer 42; 52 of the laminated material, the LDPE being extruded from an extruder feedblock and die 62b. Subsequently, the paper pre-laminated web, now having the outermost layer 62; 42;52 coated on its printed side, i.e. the outside, passes a second extruder feedblock and die 64b and a lamination nip 65, where a molten polymer curtain 64 is joined and coated onto the other side of the pre-laminate, i.e. on the barrier-coated side of the paper substrate. Thus, the innermost heat sealable layer(s) 64: 43; 53 are coextrusion coated onto the inner side of the paper pre-laminate web, to form the finished laminated packaging material 66, which is finally wound onto a storage reel, not shown.

These two coextrusion steps at lamination roller nips 63 and 65, may alternatively be performed as two consecutive steps in the opposite order.

According to another embodiment, one or both of the outermost layers may instead be applied in a pre-lamination station, where the coextrusion coated layer is first applied to the outside of the (printed) bulk paperboard layer or onto the barrier-coated paper substrate, and thereafter the two pre-laminated paper webs may be joined to each other, as described above.

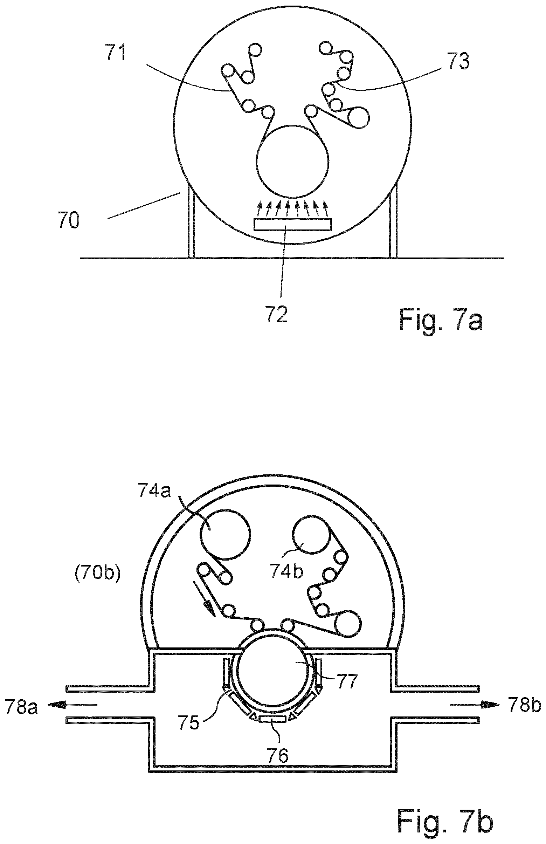

Fig. 7a is a diagrammatic view of an example of a plant 70 for physical vapour deposition, PVD, of e.g. an aluminium metal coating, onto a web substrate of the invention. The coated or uncoated paper substrate 71 is subjected, on its pre-coated side, to continuous evaporation deposition 72, of evaporised aluminium, to form a metallised layer of aluminium or, alternatively to a mixture of oxygen with aluminium vapour, to form a deposited coating of aluminium oxide. The coating is provided at a thickness from 5 to 200 nm, such as from 5 to 100 nm, such as from 10 to 50 nm, so that the barrier-coated paper substrate 73 of the invention is formed. The aluminium vapour is formed from ion bombardment of an evaporation source of a solid piece of aluminium at 72. For the coating of Aluminium oxide, also some oxygen gas may be injected into the plasma chamber via inlet ports.

Fig. 7b is a diagrammatic view of an example of a plant 70b for plasma enhanced chemical vapour deposition coating, PECVD, of e.g. hydrogenated amorphous diamond-like carbon coatings onto a web substrate of the invention. The web substrate 74a is subjected, on one of its surfaces, to continuous PECVD, of a plasma, in a plasma reaction zone 75 created in the space between magnetron electrodes 76, and a chilled web-transporting drum 77, which is also acting as an electrode, while the film is forwarded by the rotating drum, through the plasma reaction zone along the circumferential surface of the drum. The plasma for deposition coating of an amorphous DLC coating layer may for example be created from injecting a gas precursor composition comprising an organic hydrocarbon gas, such as acetylene or methane, into the plasma reaction chamber. Other gas barrier coatings may be applied by the same principal PECVD method, such as silicon oxide coatings, SiOx, then starting from a precursor gas of an organosilicon compound. The PECVD plasma chamber is kept at vaccum conditions by continuously evacuating the chamber at outlet ports 78a and 78b.

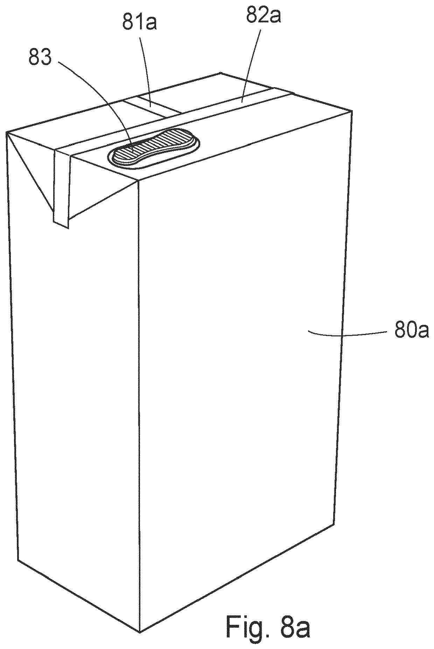

Fig. 8a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 81a and 82a, respectively, and optionally an opening device 83. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

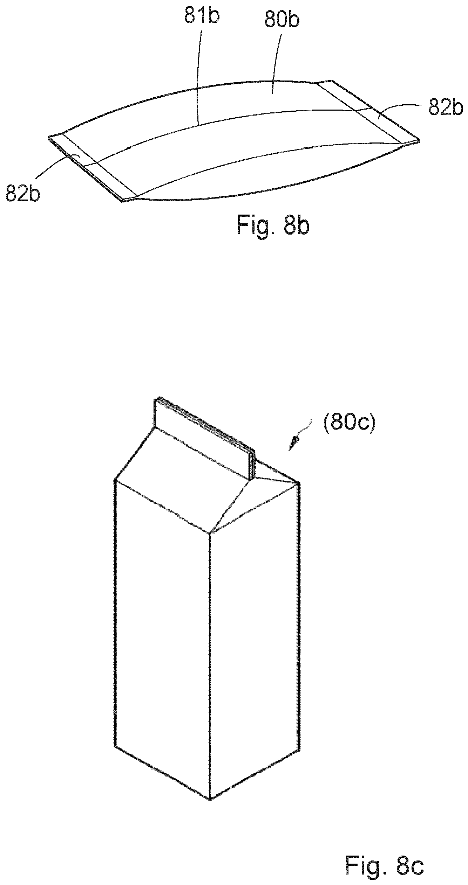

Fig. 8b shows an alternative example of a packaging container 80b produced from an alternative packaging laminate according to the invention. The alternative packaging laminate is thinner by having a thinner paper bulk layer, and thus it is not dimensionally stable enough to form a parallellepipedic or wedge-shaped packaging container, and is not fold formed after transversal sealing 82b. The packaging container will remain a pillow-shaped pouch-like container and be distributed and sold in this form.

Fig. 8c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

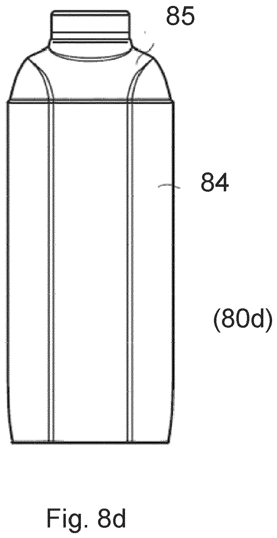

Fig. 8d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages are for example marketed under the trade names of Tetra Top® and Tetra Evero®. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

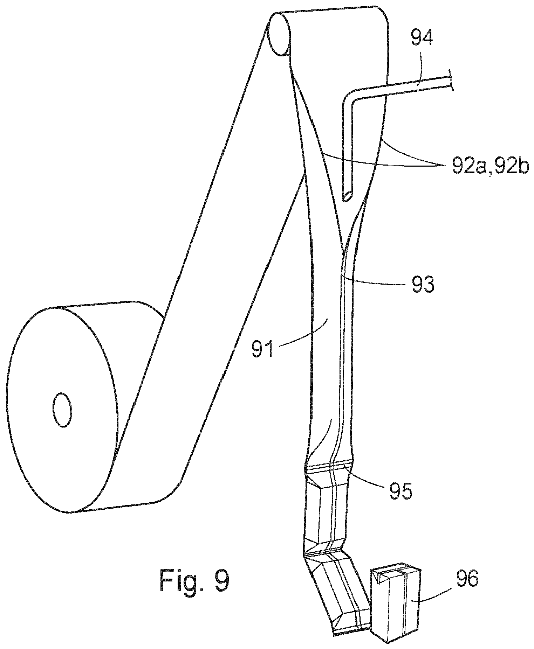

Fig. 9 shows the principle as described in the introduction of the present application, i.e. a web of packaging material is formed into a tube 91 by overlapping the longitudinal edges 92a, 92b of the web and heat sealing them to one another, to thus form an overlap joint 93. The tube is continuously filled 94 with the liquid food product to be filled and is divided into individual, filled packages by repeated, double transversal seals 95 of the tube at a pre-determined distance from one another below the level of the filled contents in the tube. The packages 96 are separated by cutting between the double transversal seals (top seal and bottom seal) and are finally shaped into the desired geometric configuration by fold formation along prepared crease lines in the material.

As a final remark, the invention is not limited by the embodiments shown and described above, but may be varied within the scope of the claims.

**Claims**

1. Use of a paper substrate (10a; 10b; 20a; 20b), for a gas-barrier material in a laminated packaging material for packaging of oxygen sensitive food products, such as liquid, semi-liquid or viscous food products or water, wherein the paper substrate has a grammage from 30 to 100 g/m$^2$, as measured according to ISO 536:2012, a strain at break in the machine direction above 3%, as measured according to ISO 1924-3:2005 and a Bendtsen surface roughness on at least one side below 150 ml/min, as measured according to ISO 8791-2:2013.

2. Use as claimed in claim 1, wherein the paper substrate has a strain at break in the machine direction in the range of 3.5% - 9.0%, such as 4.0% - 8.0%, as measured according to ISO 1924-3:2005.

3. Use as claimed in any one of claims 1 and 2, wherein the paper substrate has a strain at break in the cross direction above 5.0%, as measured according to ISO 1924-3:2005.

4. Use as claimed in any one of the preceding claims, wherein the paper substrate has a basis weight below 90 g/m$^2$, such as below 80 g/m$^2$, such as below 70 g/m$^2$, such as below 66 g/m$^2$, such as below 60 g/m$^2$, such as below 55 g/m$^2$, such as below 50 g/m$^2$, as measured according to ISO 536:2012.

5. Use as claimed in any one of the preceding claims, wherein the Bendtsen surface roughness on at least one side is below 100 ml/min, such as below 70 ml/min.

6. Use as claimed in any one of the preceding claims, wherein the paper substrate is impregnated, with a polymer, such as selected from a group consisting of polyvinyl alcohol, PVOH, ethylene vinyl alcohol, EVOH, starch, starch derivatives, carboxymethyl-cellulose, CMC, or other cellulose ether.

7. Use as claimed in any one of the preceding claims, wherein the paper substrate has a base coating comprising a polymer, applied onto the top side of the paper substrate.

8. Use as claimed in any one of the preceding claims, wherein the paper substrate has a density of at least 800 kg/m$^3$, such as at least 900 kg/m$^3$, such as at least 1000 kg/m$^3$, as measured according to ISO 534:2011.

9. Use as claimed in any one of the preceding claims, wherein the paper substrate has been calendered, such as supercalendered.

10. Use as claimed in any one of the preceding claims, wherein cellulose fibres constitute at least 90% of the dry weight of the paper.

11. Use as claimed in any one of the preceding claims, wherein the paper substrate is a Kraft paper.

12. Gas-barrier coated paper substrate (30a; 30b; 30c), for use as a gas-barrier material in a laminated packaging material for oxygen sensitive food products, such as for liquid, semi-liquid or viscous food products or water, the paper substrate being defined as in any one of use claims 1-11, wherein the paper substrate has at least one gas barrier coating (33a, 34a; 33b, 34b; 33c) of at least one gas barrier material to a total coating thickness from 2 to 5000 nm, such as from 2 to 4000 nm.

13. Gas-barrier coated paper substrate according to claim 12, wherein the at least one gas barrier coating (33a; 33b; 33c) is formed by coating and subsequent drying of a dispersion or solution of an aqueous composition of at least one gas barrier material.

14. Gas-barrier coated paper substrate according to any one of claims 12 and 13, wherein the at least one gas barrier material comprises a polymer selected from the group consisting of polyvinyl alcohol, PVOH, ethylene vinyl alcohol, EVOH, starch, starch derivatives, xylan, xylan derivatives, nanofibrillar cellulose/ microfibrillar cellulose, NFC/ MFC, nanocrystalline cellulose, NCC, and blends of two or more thereof.

15. Gas-barrier coated paper substrate according to any one of claims 12-14, wherein the paper substrate has a vapour deposition coating (34a; 34b) of a gas barrier material selected from metals, metal oxides, inorganic oxides and amorphous diamond-like carbon coatings.

16. Gas-barrier coated paper substrate according to any one of claims 12-15, wherein the paper substrate has a first gas barrier coating (33a; 33b) formed by coating and subsequent drying of a dispersion or solution of an aqueous composition of a gas barrier material, and further has a vapour deposition coating (34a; 34b) of a gas barrier material selected from metals, metal oxides, inorganic oxides and amorphous diamond-like carbon, applied on the first gas barrier coating.

17. Laminated packaging material (40a; 40b; 50) for oxygen sensitive food products, such as for packaging of liquid, semi-liquid or viscous food products or water, comprising the paper substrate (10a;10b; 20a; 20b) as defined in any one of use claims 1-11 or the gas-barrier coated paper substrate (30a;30b; 30c) according to any one of claims 12-16, the laminated packaging material further comprising a first outermost layer of a liquid tight material (42;52) and a second innermost layer of a liquid tight material (43;53), and a bulk layer (41;51) of paper or paperboard or other cellulose-based material and having the paper substrate (10a;10b; 20a; 20b), or gas-barrier coated paper substrate (30a;30b;30c), laminated between the bulk layer and the second innermost layer.

18. Laminated packaging material according to claim 17, wherein the paper substrate, or gas-barrier coated paper substrate, is laminated to the bulk layer by applying and drying from 0.5 to 10, such as from 1 to 5 g/m$^2$ of an aqueous interjacent bonding composition (46b; 56) comprising a water-dispersible binder selected from the group consisting of acrylic polymers and copolymers, starch, starch derivatives, cellulose derivatives, polymers and, copolymers of vinyl acetate, copolymers of vinyl alcohol, and copolymers of styrene-acrylic latex or styrene-butadiene latex.

19. Laminated packaging material according to any one of claims 17-18, having a pre-manufactured, polymer film laminated on the inner side of the paper substrate or gas-barrier coated paper substrate, for improved robustness of the mechanical properties of the laminated packaging material.

20. Laminated packaging material (50) according to any one of claims 17-19, having a pre-manufactured polymer film (54, 54a) laminated on the inner side of the paper substrate (10a;10b; 20a; 20b) or gas-barrier coated paper substrate (30c), i.e. on the side of the paper substrate which is opposite to the side that is laminated to the bulk layer, wherein the pre-manufactured polymer film (54, 54a) has a vapour deposition coating (54b) of a gas barrier material selected from metals, metal oxides, inorganic oxides and amorphous diamond-like carbon coatings.

21. Packaging container (50a; 50b; 50c; 50d) for packaging of oxygen sensitive food products, such as of liquid, semi-liquid or viscous food products or water, comprising the laminated packaging material (40a; 40b; 50) as defined in any one of claims 17-20.

(10a)

Fig. 1a

(10b)

Fig. 1b

Fig. 1c

Fig. 1d

Fig. 1e

(20a)

Fig. 2a

(20b)

Fig. 2b

(30a)

34a

33a

31a

Fig. 3a

(30b)

34b

33b

32b

31b

Fig. 3b

(30c)

33c

32c

31c

Fig. 3c

(40a)

42
47
41
46; 46b
45a;
30a
33a
34a
48
43
10a/b;
31a

Fig. 4a

(40b)

42
47
41
46; 46b
32b
33b
45b;
30b
34b
48
43
20a/b;
31b

Fig. 4b

Fig. 5

62a

63a

61a

(60a)

64a

Fig. 6a

62b

61b

62

(60b)

63

64b

64

65

Fig. 6b

66

71

73

70

↑↑↑↑↑↑↑

72

Fig. 7a

74a

(70b)

74b

78a ←

77

75

76

78b →

Fig. 7b

81a  82a

83

80a

Fig. 8a

Fig. 8b

Fig. 8c

85

84

(80d)

Fig. 8d

Fig. 9

| | Europäisches Patentamt European Patent Office Office européen des brevets | EUROPEAN SEARCH REPORT | Application Number EP 23 20 2353 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 168 362 A1 (BILLERUDKORSNAES AB [SE]) 17 May 2017 (2017-05-17) * tables 1-15 * | 1-21 | INV. D21H27/10 D21H19/74 D21H19/82 D21H19/84 D21H21/16 D21H27/30 B65D85/72 |
| A | EP 4 036 305 A1 (BILLERUDKORSNAES AB [SE]) 3 August 2022 (2022-08-03) * claims 1-15 * | 1-21 | |
| A | EP 3 385 445 A1 (BILLERUDKORSNAES AB [SE]) 10 October 2018 (2018-10-10) * claims 1-15 * | 1-21 | |
| A,D | WO 2017/089508 A1 (TETRA LAVAL HOLDINGS & FINANCE [CH]) 1 June 2017 (2017-06-01) * claims 1-19 * | 1-21 | |
| A | EP 4 008 548 A1 (TETRA LAVAL HOLDINGS & FINANCE [CH]) 8 June 2022 (2022-06-08) * claims 1-18 * | 1-21 | |
| A | EP 3 409 463 A1 (TETRA LAVAL HOLDINGS & FINANCE [CH]) 5 December 2018 (2018-12-05) * claims 1-15 * | 1-21 | TECHNICAL FIELDS SEARCHED (IPC) D21H B65D |
| A | EP 3 633 104 A1 (BILLERUDKORSNAES AB [SE]) 8 April 2020 (2020-04-08) * claims 1-15 * | 1-21 | |

The present search report has been drawn up for all claims

| Place of search | Date of completion of the search | Examiner |
|---|---|---|
| Munich | 8 February 2024 | Karlsson, Lennart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 2353

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | | Publication date | Patent family member(s) | | Publication date |
|---|---|---|---|---|---|
| EP 3168362 | A1 | 17-05-2017 | CN | 108350664 A | 31-07-2018 |
| | | | EP | 3168362 A1 | 17-05-2017 |
| | | | ES | 2666830 T3 | 08-05-2018 |
| | | | US | 2018327975 A1 | 15-11-2018 |
| | | | US | 2020190745 A1 | 18-06-2020 |
| | | | WO | 2017080910 A1 | 18-05-2017 |
| EP 4036305 | A1 | 03-08-2022 | EP | 4036305 A1 | 03-08-2022 |
| | | | FI | 4036305 T3 | 31-01-2024 |
| EP 3385445 | A1 | 10-10-2018 | AU | 2018248870 A1 | 14-03-2019 |
| | | | BR | 112019017757 A2 | 31-03-2020 |
| | | | CA | 3048107 A1 | 11-10-2018 |
| | | | CN | 110249094 A | 17-09-2019 |
| | | | EP | 3385445 A1 | 10-10-2018 |
| | | | EP | 3607143 A1 | 12-02-2020 |
| | | | PL | 3385445 T3 | 31-12-2019 |
| | | | RU | 2019122468 A | 06-05-2021 |
| | | | US | 2021102340 A1 | 08-04-2021 |
| | | | WO | 2018185216 A1 | 11-10-2018 |
| WO 2017089508 | A1 | 01-06-2017 | BR | 112018010656 A2 | 13-11-2018 |
| | | | CN | 108290370 A | 17-07-2018 |
| | | | EP | 3380318 A1 | 03-10-2018 |
| | | | EP | 4105013 A1 | 21-12-2022 |
| | | | ES | 2926482 T3 | 26-10-2022 |
| | | | JP | 7001592 B2 | 19-01-2022 |
| | | | JP | 2019503890 A | 14-02-2019 |
| | | | RU | 2018123179 A | 27-12-2019 |
| | | | US | 2018311940 A1 | 01-11-2018 |
| | | | WO | 2017089508 A1 | 01-06-2017 |
| EP 4008548 | A1 | 08-06-2022 | CN | 116472173 A | 21-07-2023 |
| | | | EP | 4008548 A1 | 08-06-2022 |
| | | | JP | 2023551062 A | 06-12-2023 |
| | | | US | 2023405978 A1 | 21-12-2023 |
| | | | WO | 2022117462 A1 | 09-06-2022 |
| EP 3409463 | A1 | 05-12-2018 | BR | 112019024995 A2 | 16-06-2020 |
| | | | CN | 110678325 A | 10-01-2020 |
| | | | EP | 3409463 A1 | 05-12-2018 |
| | | | ES | 2784755 T3 | 30-09-2020 |
| | | | JP | 2020521654 A | 27-07-2020 |
| | | | RU | 2721834 C1 | 22-05-2020 |
| | | | US | 2020094536 A1 | 26-03-2020 |
| | | | WO | 2018220132 A1 | 06-12-2018 |

EPO FORM P0459

For more details about this annex : see Official Journal of the European Patent Office, No. 12/82

EP 4 353 902 A1

## ANNEX TO THE EUROPEAN SEARCH REPORT
## ON EUROPEAN PATENT APPLICATION NO.

EP 23 20 2353

08-02-2024

| Patent document cited in search report | Publication date | Patent family member(s) | Publication date |
|---|---|---|---|
| EP 3633104 A1 | 08-04-2020 | BR 112021006430 A2 | 06-07-2021 |
| | | CA 3114652 A1 | 09-04-2020 |
| | | CN 113167028 A | 23-07-2021 |
| | | EP 3633104 A1 | 08-04-2020 |
| | | EP 3861166 A1 | 11-08-2021 |
| | | ES 2875920 T3 | 11-11-2021 |
| | | JP 2022504281 A | 13-01-2022 |
| | | PL 3633104 T3 | 25-10-2021 |
| | | US 2021348339 A1 | 11-11-2021 |
| | | WO 2020070306 A1 | 09-04-2020 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011003565 A1
- WO 2017089508 A1
- WO 2017089508 A